# EUROPEAN PATENT APPLICATION

(11) **EP 1 921 555 A1**
(43) Date of publication of application: **14.05.2008**
(21) Application number: 07005041.4
(22) Date of filing: 12.03.2007
(51) Int. Cl.: G06F 21/00, H04L 29/06, H04L 9/32

(54) **Method and apparatus for moving dividing, or merging copyrighted content**

(30) Priority: 09.11.2006 JP 2006304362; 06.12.2006 JP 2006329519
(71) Applicant: KABUSHIKI KAISHA TOSHIBA, Tokyo 105-8001 (JP)
(72) Inventor: Watanabe, Keiko, Tokyo 105-8001 (JP); Terauchi, Toru, Tokyo 105-8001 (JP); Sato, Jun, Tokyo 105-8001 (JP)
(74) Representative: HOFFMANN EITLE

(57) **Abstract**

According to an aspect of this invention, in moving copyrighted content acquired from a rights server (RI) from a first terminal (TA) to a second terminal (TB), the first terminal (TA) of the moving source re-encrypts a key encryption key (K_{REK}) contained in the rights object (RO_{A}) of the copyrighted content as the moving target by using the terminal public key (K_{PUB_B}) of the second terminal (TB) and regenerates at least one of the signature of existing rights information and the signature of added rights consumption information on the basis of the terminal private key (K_{PRI_A}) of the terminal (TA).

## Description

The present invention relates to a method and apparatus which enable the moving, dividing, or merging of, e.g., copyrighted content.

Recently, distribution services for downloading rich content such as music from a content server to an information terminal such as a mobile terminal or personal computer are becoming popular. An information terminal that uses a service of this kind temporarily stores downloaded content in memory. In accordance with a user's play operation, the stored content is read from the memory and played.

Some content has rights information to secure its copyright. Content of this type is encrypted and stored. The encrypted content is decrypted and played under conditions defined by the rights information. The play conditions include, e.g., the number of times of play and the period of play. To encrypt content, a scheme is used which encrypts the content by using a content encryption key formed from, e.g., a random number, encrypts the content encryption key by using a key encryption key, and encrypts the key encryption key by using a binding key. The binding key uses, e.g., specific identification information of a terminal. When this encryption scheme is used, the content is bound to the terminal. Hence, only the information terminal that has encrypted the content can play it.

There are recently proposed various mechanisms to transfer or assign the acquired content rights to another person. For example, a rights transfer method is proposed which transfers content bound by specific identification information from a terminal to another terminal and transfers the specific identification information via a secure transmission path. After the transfer, use of the specific identification information on the terminal of the transfer destination is enabled while use of the specific identification information by the terminal of the transfer source is inhibited (e.g., Jpn. Pat. Appln. KOKAI Publication No. 2003-303137).

There is also proposed another method that provides a server to manage use of rights and makes terminals share the rights via the server (e.g., Jpn. Pat. Appln. KOKAI Publication No. 2005-092851).

However, the conventionally proposed rights transfer methods have the following problems to solve. In Open Mobile Alliance Digital Rights Management V2 (to be referred to as OMA DRM V2 hereinafter), each terminal acquires terminal binding rights from, e.g., a rights server. Effective measures to transfer the rights upon changing the model or assign the rights to another terminal are not proposed yet. For example, there is rights information that changes details of the rights in accordance with the consumption situation after acquisition. In this case, it is necessary to rewrite the rights information and rewrite the signature, as needed. When the rights information and signature are rewritten, rights object RO need to be re-encrypted. However, any detailed mechanism for it is not proposed yet.

The conventionally proposed rights sharing methods have the following problems to solve. In Open Mobile Alliance Digital Rights Management Secure Content Exchange (to be referred to as OMA DRM SCE hereinafter), a user domain is set for, e.g., each family or group to allow terminals in the user domain to share rights. However, when content rights are shared in a user domain, and the environment changes because of, e.g., house-moving of a member, it is necessary to continuously allow the member to use the shared content. A measure for this has been demanded.

It is the first object of the present invention to provide a copyrighted content moving method that enables to appropriately move, between terminals, copyrighted content bound to a terminal in consideration of a change in details of the right.

It is the second object of the present invention to provide an information terminal apparatus that enables rights sharing for a long term even when the environment of sharing members changes.

According to a first aspect of a copyrighted content moving method of the present invention, a first terminal acquires a public key of a second terminal from the second terminal, re-encrypts encryption key information contained in a rights object as a moving target on the basis of the acquired public key of the second terminal, and transmits encrypted content and a rights object containing the re-encrypted encryption key information to the second terminal.

According to a second aspect of a copyrighted content moving method of the present invention, a first terminal acquires a public key of a rights server from the rights server and re-encrypt encryption key information contained in a rights object as a moving target on the basis of the acquired public key of the rights server, and transmits a second rights object containing the re-encrypted encryption key information to the rights server. The rights server acquires a public key of a second terminal of a moving destination from the second terminal, re-encrypts, on the basis of the acquired public key of the second terminal, the encryption key information contained in the second rights object sent from the first terminal, and transmits a third rights object containing the re-encrypted encryption key information to the second terminal, and the encrypted content is transmitted from the first terminal to the second terminal.

According to a third aspect of a copyrighted content moving method of the present invention, a first terminal acquires a public key of a second terminal from the second terminal, re-encrypts encryption key information contained in a rights object as a moving target on the basis of the acquired public key of the second terminal, and transmits a second rights object containing the re-encrypted encryption key information to a rights server. The rights server changes, on the basis of its private key, signature information contained in the second rights object sent from the first terminal, and transmits a third rights object containing the changed signature information to the second terminal, and encrypted content is transmitted from the first terminal to the second terminal.

According to a fourth aspect of a copyrighted content moving method of the present invention, a first terminal acquires a public key of a second terminal from the second terminal, re-encrypts encryption key information contained in a rights object as a moving target on the basis of the acquired public key of the second terminal, and transmits encrypted content and a second rights object containing the re-encrypted encryption key information to the second terminal. The second rights object sent from the first terminal from the second terminal is transferred to a rights server. The rights server changes, on the basis of its private key, signature information contained in the second rights object sent from the second terminal, and transmits a third rights object containing the changed signature information to the second terminal.

According to a first aspect of an information terminal apparatus of the present.invention, user domain management information including a first user domain key and a second user domain key different from the first user domain key is stored, and upon receiving a user domain division/merger request, a second rights object corresponding to a user domain of a division/merger destination is generated by re-encrypting, on the basis of the stored second user domain key, encryption key information contained in a first rights object.

According to a second aspect of an information terminal of the present invention, upon receiving a user domain merger request, a second rights object corresponding to a user domain of a merger destination is generated by re-encrypting, on the basis of a second user domain key stored in advance, encryption key information encrypted by a first user domain key and adding the re-encrypted encryption key information to a first rights object.

According to a third aspect of an information terminal of the present invention, upon receiving a user domain division request, a second rights object corresponding to a user domain of a division destination is generated by deleting, from a first rights object, one of encryption key information encrypted by a first user domain key and encryption key information encrypted by a second user domain key.

The invention can be more fully understood from the following detailed description when taken in conjunction with the accompanying drawings, in which:
FIG. 1 is a schematic view showing the configuration of a communication system which practices a copyrighted content moving method according to the first embodiment of the present invention;
FIG. 2 is a block diagram showing the module arrangement of a terminal used in the system shown in FIG. 1;
FIG. 3 is a view for explaining the moving procedure of the copyrighted content moving method according to the first embodiment of the present invention;
FIG. 4 is a view showing an example of a rights object;
FIG. 5 is a view showing the first example of a rights object conversion processing procedure executed by the terminal shown in FIG. 2 and details of the processing;
FIG. 6 is a view showing the second example of a rights object conversion processing procedure executed by the terminal shown in FIG. 2 and details of the processing;
FIG. 7 is a view showing the third example of a rights object conversion processing procedure executed by the terminal shown in FIG. 2 and details of the processing;
FIG. 8 is a block diagram showing the module arrangement of a rights server to implement a copyrighted content moving method according to the second embedment of the present invention;
FIG. 9 is a view for explaining the first example of the copyrighted content moving method according to the second embedment of the present invention;
FIG. 10 is a view for explaining the second example of the copyrighted content moving method according to the second embedment of the present invention;
FIG. 11 is a view for explaining the third example of the copyrighted content moving method according to the second embedment of the present invention;
FIG. 12 is a view for explaining the fourth example of the copyrighted content moving method according to the second embedment of the present invention;
FIG. 13 is a view for explaining the fifth example of the copyrighted content moving method according to the second embedment of the present invention;
FIG. 14 is a view showing another example of the format of a rights object;
FIG. 15 is a view showing a rights object conversion processing procedure executed by a moving source terminal and details of the processing upon copyrighted content movement shown in FIGS. 9 to 13;
FIG. 16 is a view for explaining an example of the arrangement of an RO management table provided in a rights server shown in FIG. 8 and a method of accessing the table;
FIG. 17 is a view showing the first example of a rights object conversion processing procedure executed by the rights server shown in FIG. 8 and details of the processing;
FIG. 18 is a view showing the second example of a rights object conversion processing procedure executed by the rights server shown in FIG. 8 and details of the processing;
FIG. 19 is a block diagram showing the arrangement of an information terminal according to the third embodiment of the present invention;
FIG. 20 is a view showing an example of an encryption format of a rights object for a user domain according to the third embodiment of the present invention;
FIGS. 21A and 21B are views showing the first example of user domain division/merger according to the third embodiment of the present invention;
FIG. 22 is a view showing details of rights object generation processing (without any change in rights information) upon user domain division/merger shown in FIGS. 21A and 21B;
FIG. 23 is a view showing details of rights object generation processing (with a change in rights information) upon user domain division/merger shown in FIGS. 21A and 21B;
FIGS. 24A and 24B are views showing the second example of user domain division/merger according to the third embodiment of the present invention;
FIG. 25 is a view showing an example of an encryption format of a rights object for a plurality of user domains according to the third embodiment of the present invention;
FIG. 26 is a view showing details of rights object generation processing (without any change in rights information) upon user domain merger shown in FIGS. 24A and 24B;
FIG. 27 is a view showing details of rights object generation processing (with a change in rights information) upon user domain merger shown in FIGS. 24A and 24B;
FIG. 28 is a view showing details of rights object generation processing (without any change in rights information) upon user domain division shown in FIGS. 24A and 24B;
FIG. 29 is a view showing details of rights object generation processing (with a change in rights information) upon user domain division shown in FIGS. 24A and 24B;
FIG. 30 is a view showing details of rights object generation processing upon moving DEA according to the third embodiment of the present invention;
FIG. 31 is a view showing an example of an encryption format of a rights object for a user domain according to the fourth embodiment of the present invention;
FIG. 32 is a view showing details of rights object regeneration processing (without any change in rights information) upon user domain division/merger according to the fourth embodiment of the present invention;
FIG. 33 is a view showing details of rights object regeneration processing (with a change in rights information) upon user domain division/merger according to the fourth embodiment of the present invention;
FIG. 34 is a view showing an example of an encryption format of a rights object for a plurality of user domains according to the fourth embodiment of the present invention;
FIG. 35 is a view showing details of rights object regeneration processing (without any change in rights information) upon user domain merger according to the fourth embodiment of the present invention;
FIG. 36 is a view showing details of rights object regeneration processing (with a change in rights information) upon user domain merger according to the fourth embodiment of the present invention;
FIG. 37 is a view showing details of rights object regeneration processing (without any change in rights information) upon user domain division according to the fourth embodiment of the present invention;
FIG. 38 is a view showing details of rights object regeneration processing (with a change in rights information) upon user domain division according to the fourth embodiment of the present invention;
FIG. 39 is a sequence chart showing the first example of a DEA moving procedure between terminals according to the fourth embodiment of the present invention;
FIG. 40 is a view showing the first example of the DEA moving procedure between terminals according to the fourth embodiment of the present invention;
FIG. 41 is a view showing the second example of a DEA moving procedure between terminals according to the fourth embodiment of the present invention;
FIG. 42 is a sequence chart showing the second example of the DEA moving procedure between terminals according to the fourth embodiment of the present invention; and
FIG. 43 is a view showing an example of DEA moving processing between terminals according to the fourth embodiment of the present invention.

The embodiments of a copyrighted content moving method according to the present invention will be described below with reference to the accompanying drawing.

### (First Embodiment)

In the first embodiment of the present invention, a moving source terminal TA executes binding conversion processing of a rights object RO and rewrite processing of rights information and its signature, thereby moving copyrighted content directly from a terminal to another terminal.

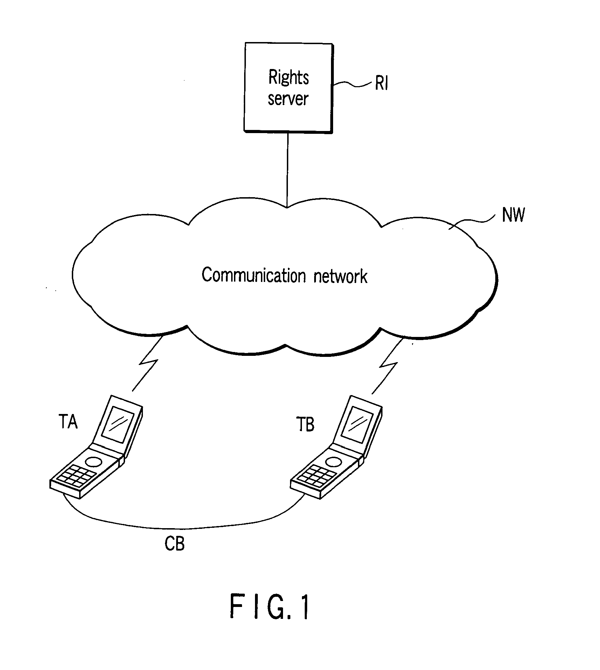

FIG. 1 is a schematic view showing the configuration of a communication system which practices a copyrighted content moving method according to the first embodiment of the present invention. This system makes a plurality of terminals TA and TB held by users connectable to a rights server RI via a communication network NW and connects the terminals TA and TB via a signal cable CB. The rights server RI includes a Web server having a module serving as a rights issuer.

The communication network NW includes, e.g., an Internet Protocol (IP) network represented by the Internet and a plurality of access networks to access the IP network. A cable subscriber network using, e.g., a digital subscriber line (DSL) and optical transmission line, a wireless local area network (LAN), and a mobile communication network are used as the access networks. A Universal Serial Bus (USB) cable as the signal cable CB, Bluetooth® (BT) or local communication such as wireless LAN is used.

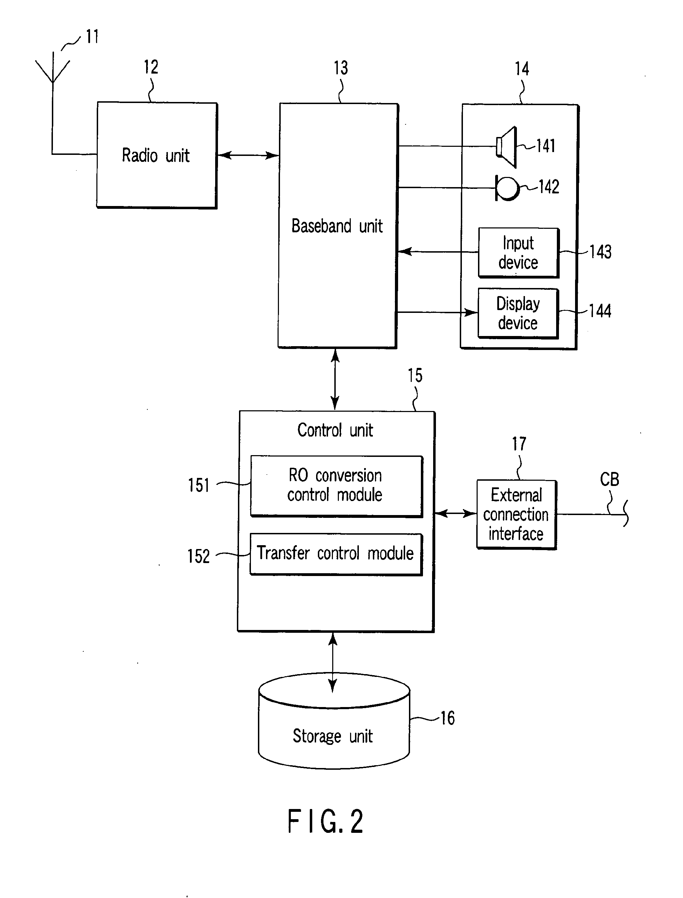

Each of the terminals TA and TB includes a mobile terminal such as a mobile phone or personal digital assistant (PDA) and has the following arrangement. FIG. 2 is a block diagram showing its module arrangement. Each of the terminals TA and TB comprises an antenna 11, radio unit 12, baseband unit 13, user interface unit 14, control unit 15, and storage unit 16. Each terminal also has an external connection interface 17.

The radio unit 12 wirelessly communicates with a base station of the communication network NW by using a wireless access scheme such as code division multiple access-frequency division duplex (CDMA-FDD) defined by the communication network NW. The baseband unit 13 encodes/decodes transmission/reception data and multiplexes/demultiplexes transmission/reception packets under the control of the control unit 15. The user interface unit 14 has a loudspeaker 141, a microphone 142, an input device 143 including various kinds of module keys and a key pad, and a display device 144 including an LCD and LEDs.

The storage unit 16 uses, e.g., a hard disk memory or NAND flash memory as a storage medium and stores application programs and copyrighted content downloaded from the rights server RI. The external connection interface 17 transfers data to another terminal via the signal cable CB under the control of the control unit 15.

The control unit 15 comprises a central processing unit (CPU). The control unit 15 has an RO conversion control module 151 and a transfer control module 152 as control modules necessary for practicing the present invention. These control modules are implemented by causing the CPU to execute application programs stored in the program memory in the storage unit 16 in advance.

When the user executes, via the input device 143, an input operation to request movement (including partial assignment) of copyrighted content, the RO conversion control module 151 executes, for the rights object RO of the copyrighted content as a moving target, conversion processing necessary for movement. In this conversion processing, the rights object RO is re-encrypted by using a terminal public key acquired from a moving destination terminal, and rights information and signature are rewritten by using the terminal private key of a moving source terminal.

When the user executes, via the input device 143, an input operation to request movement (including partial assignment) of copyrighted content, the transfer control module 152 executes processing of transferring the copyrighted content as the moving target from its terminal to another terminal of the moving destination in cooperation with the conversion processing by the RO conversion control module 151. The rights object RO is transferred from the external connection interface 17 via the signal cable CB.

The copyrighted content moving method will be described next on the basis of the above-described arrangement.

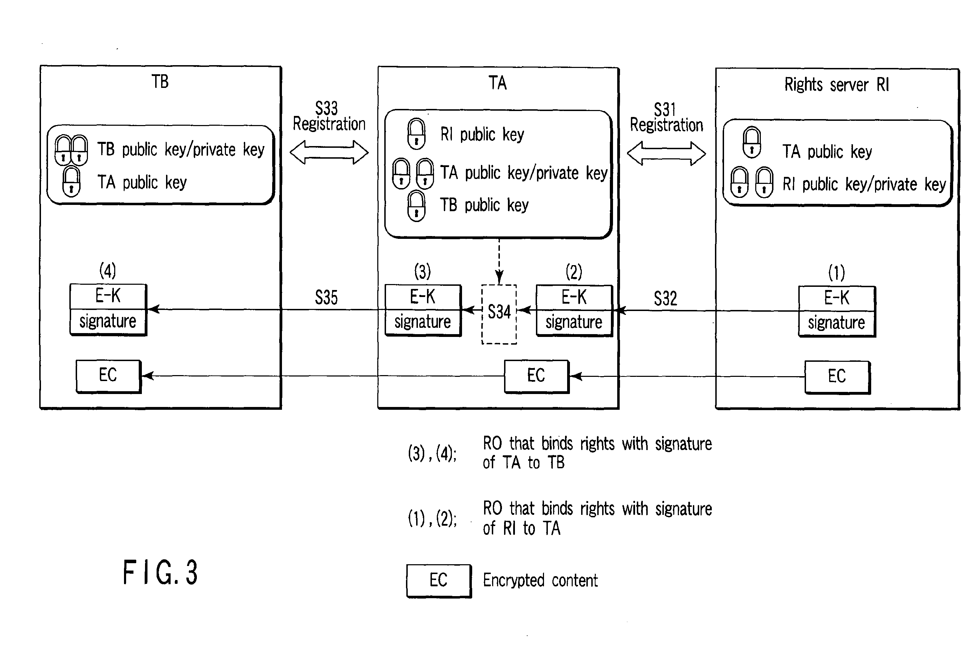

An example will be described in which the terminal TA acquires copyrighted content from the rights server RI and moves it to the terminal TB upon, e.g., changing the model. FIG. 3 is a view showing the operation procedure.

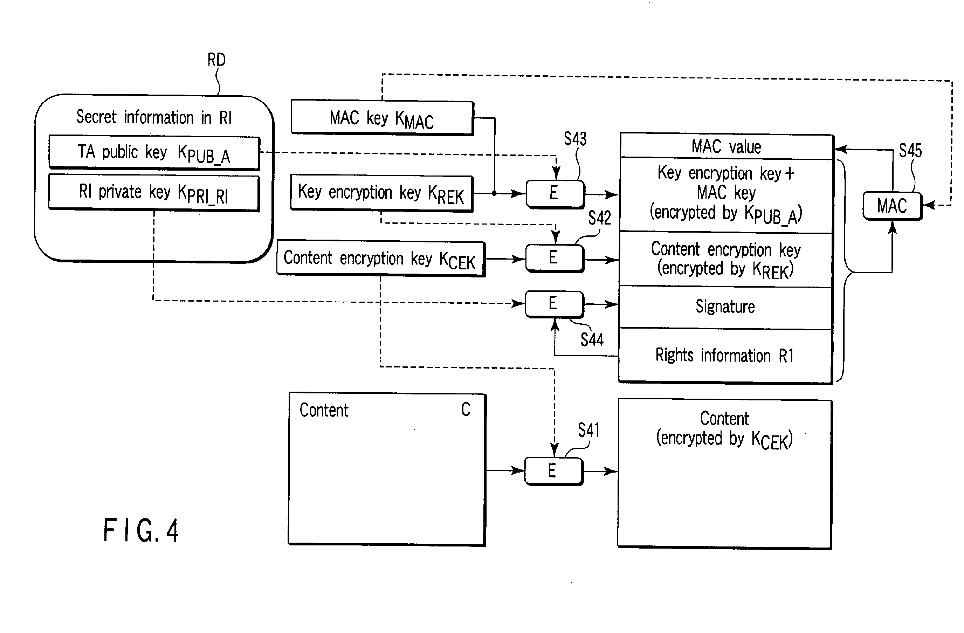

The copyrighted content includes encrypted content EC and the rights object RO, which are generated by the rights server RI in the following way. FIG. 4 is a view showing the format of the encrypted content EC and rights object RO.

In step S41, content C is encrypted by a content encryption key K_{CEK}. In step S42, the content encryption key K_{CEK} is encrypted by a key encryption key K_{REK}. In step S43, the key encryption key K_{REK} is encrypted together with a MAC key K_{MAC} by a public key K_{PUB_A} of the terminal TA, which is managed as secret information RD in the RI. The content encryption key K_{CEK} and key encryption key K_{REK} are generated on the basis of random numbers. In step S44, the signature of the rights issuer of rights information is generated on the basis of an RI private key K_{PRI_RI} managed as the secret information RD in the RI.

The rights object RO contains the rights information, the signature, the content encryption key K_{CEK} encrypted by the key encryption key K_{REK}, and the key encryption key K_{REK} and MAC key K_{MAC} encrypted by the public key K_{PUB}__{A} of the terminal TA. That is, the rights object RO binds the rights information signed by the rights server RI to the terminal TA.

A message authentication code (MAC) value is added to the rights object RO. The MAC value is calculated in step S45 on the basis of the elements contained in the rights object RO and used to verify the presence/absence of alteration of the rights object RO.

The copyrighted content is acquired in the following manner. In step S31, the terminal TA executes registration processing in the rights server RI. The terminal TA and rights server RI exchange each other's public keys. After confirming each other's validity, the terminal TA acquires the encrypted content EC and rights object RO from the rights server RI in step S32. At this time, the rights object RO binds rights information with the signature of the rights server RI to the terminal TA, as indicated by (1) and (2) in FIG. 3. The storage unit 16 stores the acquired encrypted content EC and rights object RO. The above-described processing is done via the communication network NW.

Assume that in this state, the terminal TA changes its model, the user operates the input device 143 of the terminal TA to input a request to move the copyrighted content to the terminal TB. The terminal TA connects to the terminal TB of the moving destination via the signal cable CB or local communication. In step S33, registration processing is executed between the terminals TA and TB. They exchange each other's terminal public keys. After confirming each other's validity, the terminal TA converts the rights object RO as the moving target, i.e., the rights object RO (2) that binds the rights information with the signature of the rights server RI to the terminal TA into a rights object RO for the terminal TB, i.e., a rights object RO (3) that binds rights information with the signature of the terminal TA to the terminal TB in step S34. The rights object RO conversion method will be described later in detail.

Upon completing the conversion processing, the terminal TA transfers the encrypted content EC and rights object RO (4) as the moving target to the terminal TB via the signal cable CB or local communication in step S35. The terminal TB stores the transferred encrypted content EC and rights object RO (5) in the storage unit 16. The copyrighted content is thus moved. From then on, the terminal TB can play the copyrighted content.

Some examples of the rights object RO conversion method executed by the terminal TA of the moving source will be described next.

### (1-1) First Conversion Method

To convert a rights object RO_{A} of the terminal TA into a rights object RO_{B} for the terminal TB, the terminal TA changes the key encryption key K_{REK} + MAC key K_{MAC} and the MAC value of the elements contained in the rights object RO_{A}- In addition, if details of rights information R2 after movement change from details of rights information R1 before movement, the terminal TA rewrites the signature of the rights holder of the rights information R2 after change. Even when details of rights information do not change, the signature of the rights holder is rewritten in accordance with the same procedure.

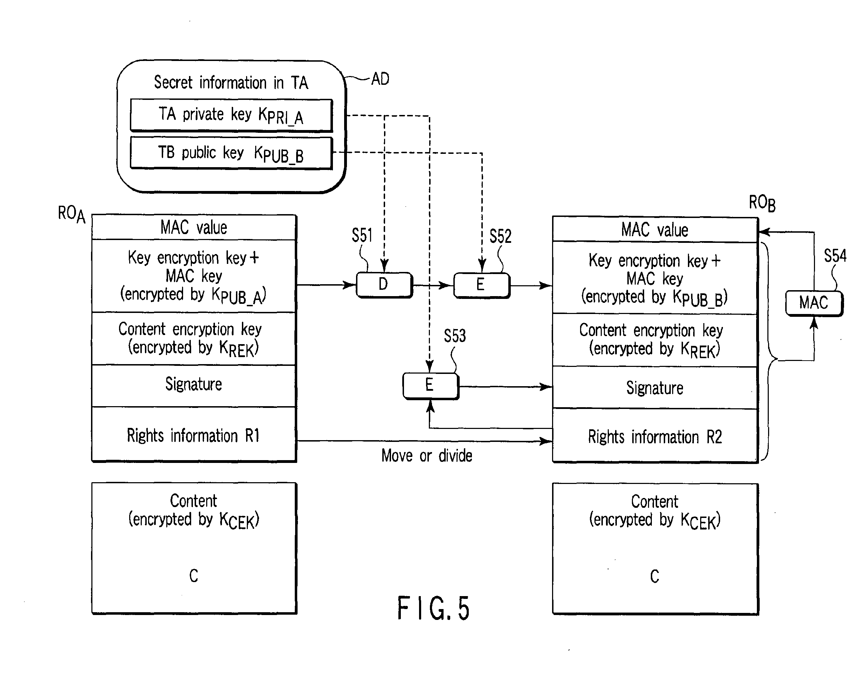

FIG. 5 is a view showing the processing procedure. FIG. 5 does not illustrate the MAC key K_{MAC} for the descriptive convenience.

In step S51, the control unit 15 of the terminal TA temporarily decrypts the encrypted key encryption key K_{REK} + MAC key K_{MAC} in the rights object RO_{A} by using a terminal private key Kp_{RI}__{A} of the terminal TA, which is saved as secret information AD in the terminal TA. In step S52, the decrypted key encryption key K_{REK} + MAC key K_{MAC} are re-encrypted on the basis of a public key K_{PUB}__{B} of the terminal TB of the moving destination and added to the rights object RO_{B} for the terminal TB as a constituent element.

The control unit 15 also generates the rights information R2 by moving or separating part of the rights information R1 in the rights object RO_{A}. In step S53, the signature of the rights holder of the rights information R2 after change is regenerated on the basis of the terminal private key K_{PRI_A} saved as the secret information AD in the terminal TA and added to the rights object RO_{B} for the terminal TB.

In step S54, the control unit 15 recalculates the MAC value for the constituent elements of the new rights object RO_{B} for the terminal TB and adds the recalculated MAC value to the rights object RO_{B} for the terminal TB.

### (1-2) Second Conversion Method (With Addition of Rights Consumption Information)

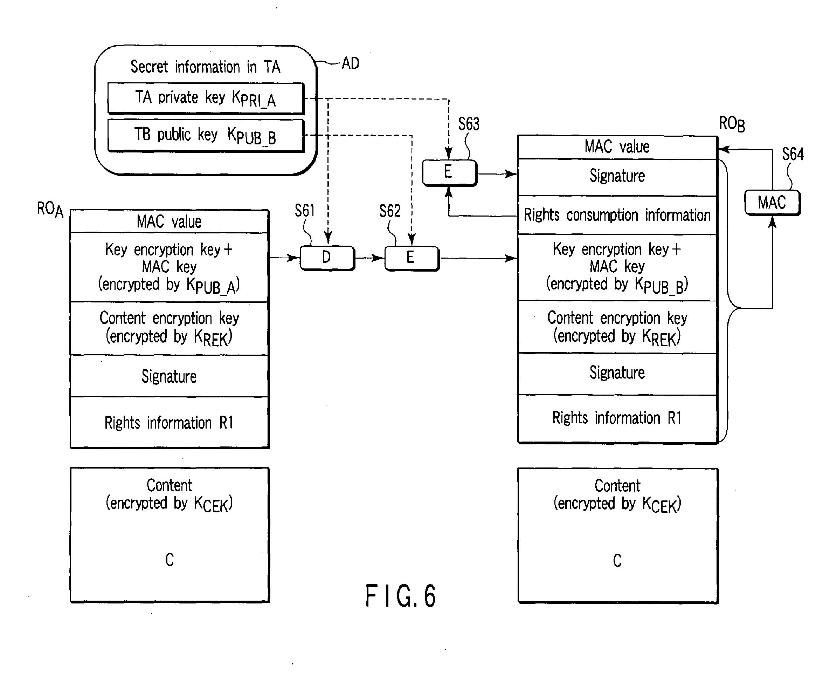

To convert the rights object RO_{A} of the terminal TA into the rights object RO_{B} for the terminal TB, the terminal TA changes the key encryption key K_{REK} + MAC key K_{MAC} and the MAC value of the elements contained in the rights object RO_{A}. The terminal TA also adds rights consumption information to the rights object RO_{B} for the terminal TB. The terminal TA also generates the signature of the rights holder of the rights consumption information and adds it to the rights object RO_{B}. FIG. 6 is a view showing the processing procedure. FIG. 6 does not illustrate the MAC key K_{MAC} for the descriptive convenience.

In step S61, the control unit 15 of the terminal TA temporarily decrypts the encrypted key encryption key K_{REK} + MAC key K_{MAC} in the rights object RO_{A} by using the terminal private key Kp_{RI_A} of the terminal TA, which is saved as the secret information AD in the terminal TA. In step S62, the decrypted key encryption key K_{REK} + MAC key K_{MAC} are re-encrypted on the basis of the public key K_{PUB}__{B} of the terminal TB of the moving destination and added to the rights object RO_{B} for the terminal TB as a constituent element.

The control unit 15 generates rights consumption information and adds the generated rights consumption information to the rights object RO_{B} for the terminal TB. In step S63, the control unit 15 generates a signature for the rights consumption information on the basis of the terminal private key K_{PRI}__{A} of the terminal TA, which is saved as the secret information AD in the terminal TA, and adds the newly generated signature to the rights consumption information in the rights object RO_{B} for the terminal TB. If no rights consumption information is necessary (when the rights information is Stateless or, when no rights consumption and division is necessary even if the rights information is Stateful), this processing can be omitted.

In step S64, the control unit 15 recalculates the MAC value for the constituent elements of the new rights object RO_{B} for the terminal TB and adds the recalculated MAC value to the rights object RO_{B} for the terminal TB.

### (1-3) Third Conversion Method (With Addition of Rights Consumption Information)

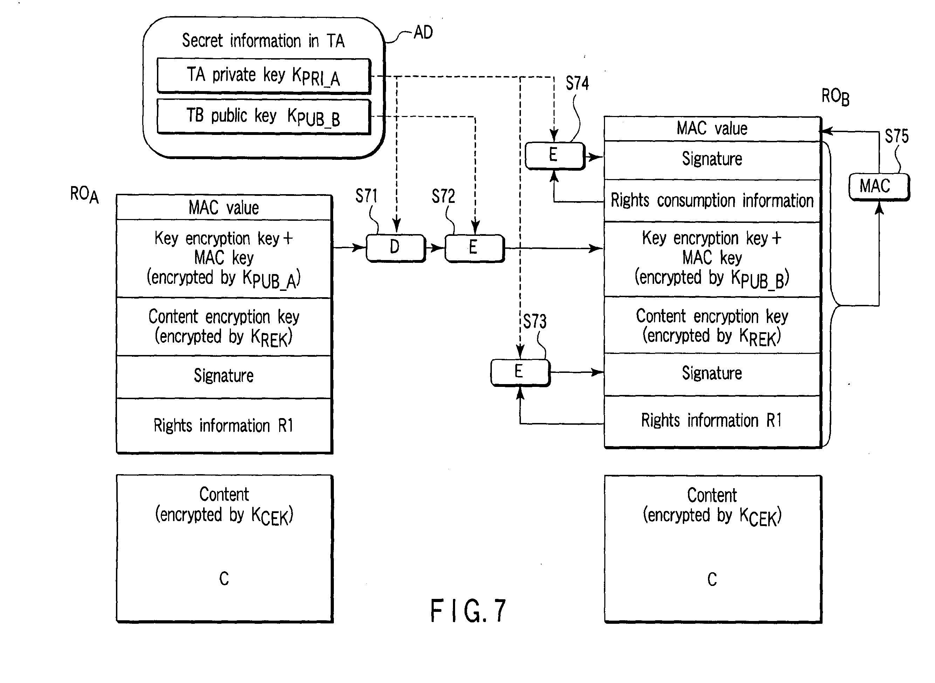

To convert the rights object RO_{A} of the terminal TA into the rights object RO_{B} for the terminal TB, the terminal TA changes the key encryption key K_{REK} + MAC key K_{MAC} and the MAC value of the elements contained in the rights object RO_{A}. The terminal TA also adds rights consumption information to the rights object RO_{B} for the terminal TB. The terminal TA also generates the signature of the rights holder of the rights consumption information and adds it to the rights object RO_{B}. The terminal TA also rewrites the signature of existing rights information to the signature of the terminal TA. FIG. 7 is a view showing the processing procedure. FIG. 7 does not illustrate the MAC key K_{MAC} for the descriptive convenience.

As in FIG. 6, in step S71, the control unit 15 of the terminal TA temporarily decrypts the encrypted key encryption key K_{REK} + MAC key K_{MAC} in the rights object RO_{A} by using the terminal private key K_{PRI_A} of the terminal TA, which is saved as the secret information AD in the terminal TA. In step S72, the decrypted key encryption key K_{REK} + MAC key K_{MAC} are re-encrypted on the basis of the public key K_{PUB_B} of the terminal TB of the moving destination and added to the rights object RO_{B} for the terminal TB as a constituent element.

The control unit 15 generates rights consumption information and adds the generated rights consumption information to the rights object RO_{B} for the terminal TB. In step S74, the control unit 15 generates a signature for the rights consumption information on the basis of the terminal private key K_{PRI_A} of the terminal TA, which is saved as the secret information AD in the terminal TA, and adds the newly generated signature to the rights consumption information in the rights object RO_{B} for the terminal TB. If no rights consumption information is necessary (when the rights information is Stateless or, when no rights consumption and division is necessary even if the rights information is Stateful), this processing can be omitted.

Simultaneously in step S73, the control unit 15 regenerates the signature of the rights information in the rights object RO_{B} for the terminal TB on the basis of the terminal private key K_{PRI_A} of the terminal TA, which is saved as the secret information AD in the terminal TA, and writes the signature in the rights object RO_{B}.

In step S75, the control unit 15 recalculates the MAC value for the constituent elements of the new rights object RO_{B} for the terminal TB and adds the recalculated MAC value to the rights object RO_{B} for the terminal TB.

As described above, according to the first embodiment, to move copyrighted content acquired from the rights server RI from the terminal TA to the terminal TB, the terminal TA of the moving source re-encrypts the key encryption key K_{REK} + MAC key K_{MAC} in the rights object RO_{A} ((2) in FIG. 3) of the copyrighted content as the moving target on the basis of the terminal public key K_{PUB_B} of the terminal TB of the moving destination. The terminal TA also regenerates at least one of the signature of existing rights information and the signature of added rights consumption information on the basis of the terminal private key K_{PRI_A} of the terminal TA. If no rights consumption information is added, the signature need not always be changed.

According to the first embodiment, the rights object RO is binding-converted from the terminal TA of the moving source to the terminal TB of the moving destination. Even when the rights information itself changes, or rights consumption information is added, the signature is appropriately regenerated. It is therefore possible to move the copyrighted content directly from the terminal TA to the terminal TB.

### (Second Embodiment)

In the second embodiment of the present invention, copyrighted content moves from a moving source terminal to a moving destination terminal via a rights server. The rights server and moving source terminal cooperatively execute binding conversion processing of a rights object RO and rewrite processing of rights information and its signature.

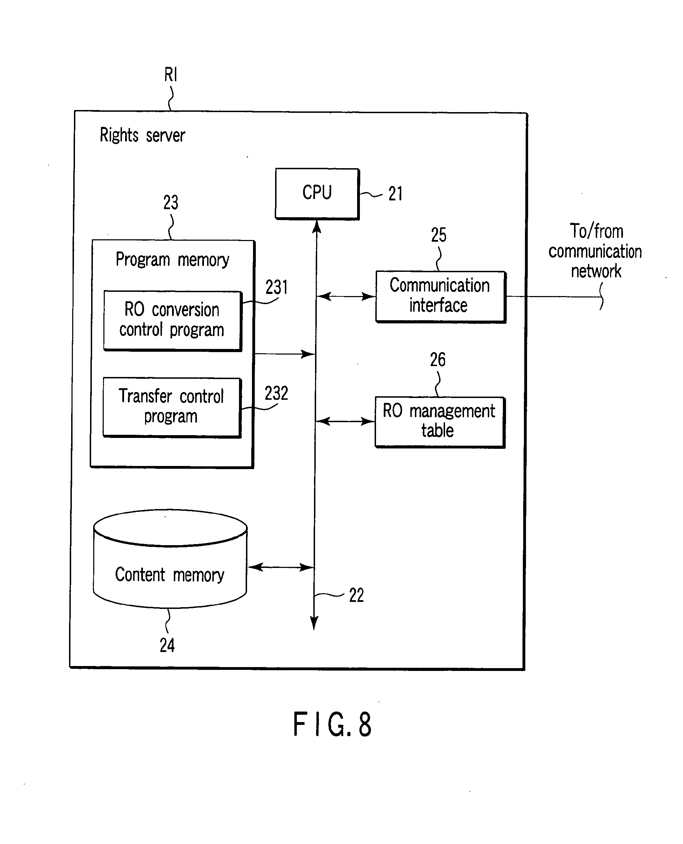

FIG. 8 is a block diagram showing the module arrangement of a rights server RI used to practice a copyrighted content moving method according to the second embedment of the present invention. Terminals TA and TB basically have the same arrangement as in FIG. 2, and a description thereof will be omitted.

The rights server RI includes a Web server and has a central processing unit (CPU) 21. A program memory 23 and a content memory 24 connect to the CPU 21 via a bus 22. A communication interface 25 and an RO management table 26 also connect to the CPU 21.

The communication interface 25 transmits data to the terminals TA and TB in accordance with a communication protocol defined by a communication network NW under the control of the CPU 21. For example, a Transmission Control Protocol/Internet Protocol (TCP/IP) is used as the communication protocol.

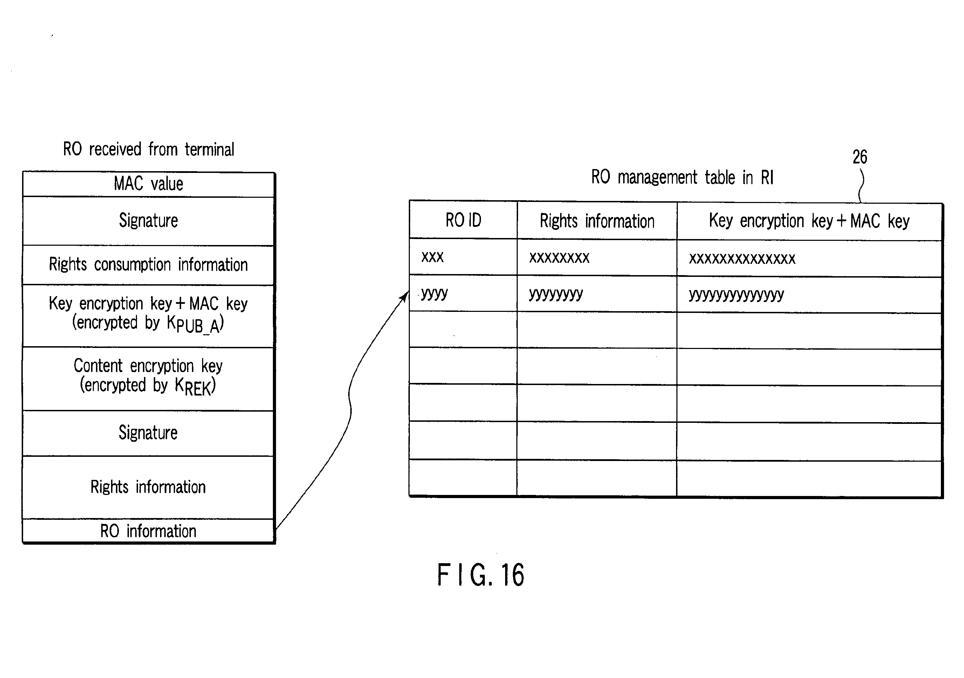

The content memory 24 stores copyrighted content as a download target. Copyrighted content contains encrypted content EC and a rights object RO which are stored in correspondence with each other. The RO management table 26 stores rights information and a key encryption key + MAC key in correspondence with the RO information (ROID) of each rights object RO. FIG. 16 shows an example. The RO management table 26 is used in only the fifth example to be described later.

The program memory 23 includes a hard disk or a nonvolatile memory such as a ROM and stores an RO conversion control program 231 and a transfer control program 232 as control application programs according to the present invention.

Upon receiving a rights object conversion request from a moving source (assignment source) terminal or moving destination (assignment destination) terminal, the RO conversion control program 231 causes the CPU 21 to execute, for the rights object RO, conversion processing necessary for movement. In this conversion processing, the rights object RO is re-encrypted by using a terminal public key acquired from a moving destination terminal, and rights information and signature are rewritten by the private key of the rights server RI.

Upon receiving a rights object conversion request from a moving source terminal or moving destination terminal, the transfer control program 232 causes the CPU 21 to execute processing of transferring the copyrighted content as the moving target from the moving source terminal to the moving destination terminal in cooperation with the conversion processing by the RO conversion control program 231. The rights object is transferred via the communication network NW.

The copyrighted content moving (assignment) method will be described next on the basis of the above-described arrangement.

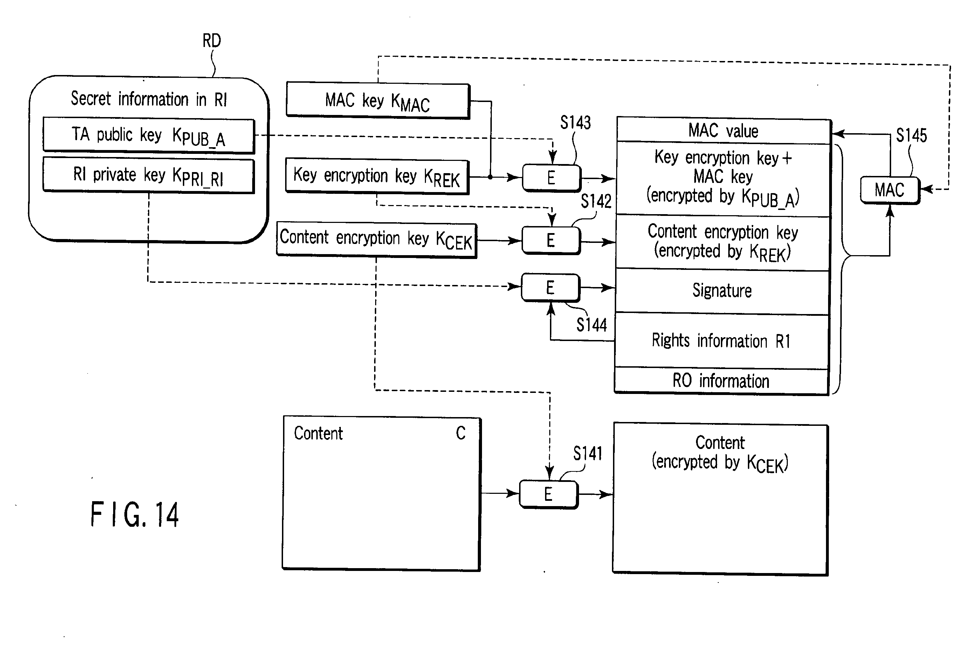

The format of the encrypted content EC and rights object RO generated by the rights server RI will be described first. FIG. 14 is a view showing the format of the encrypted content EC and rights object RO.

In step S141, content C is encrypted by a content encryption key K_{CEK}. In step S142, the content encryption key K_{CEK} is encrypted by a key encryption key K_{REK·} In step S143, the key encryption key K_{REK} is encrypted together with a MAC key K_{MAC} by a public key K_{PUB_A} of the terminal TA, which is managed as secret information RD in the RI. The content encryption key K_{CEK} and key encryption key K_{REK} are generated on the basis of random numbers. In step S144, the signature of the rights issuer of rights information is generated on the basis of an RI private key K_{PRI_RI} managed as the secret information RD in the RI.

The rights object RO contains the rights information, the signature, the content encryption key K_{CEK} encrypted by the key encryption key K_{REK}, and the key encryption key K_{REK} and MAC key K_{MAC} encrypted by the public key K_{PUB}__{A} of the terminal TA. RO information to identify the object is added to the rights object RO. The RO information uses an identifier (ROID) unique to each rights object RO.

A message authentication code (MAC) value is added to the rights object RO. The MAC value is calculated in step S145 on the basis of the elements contained in the rights object RO and used to verify the presence/absence of alteration of the rights object RO.

The RO management table 26 in the rights server RI manages the rights object RO generated for each item of copyrighted content in the above-described way. For example, rights information and a key encryption key K_{REK} ⁺ MAC key K_{MAC} are stored for each rights object RO in correspondence with ROID, as shown in FIG. 16.

The copyrighted content moving method between terminals via the rights server RI will be described next by means of several examples.

### (1) First Example

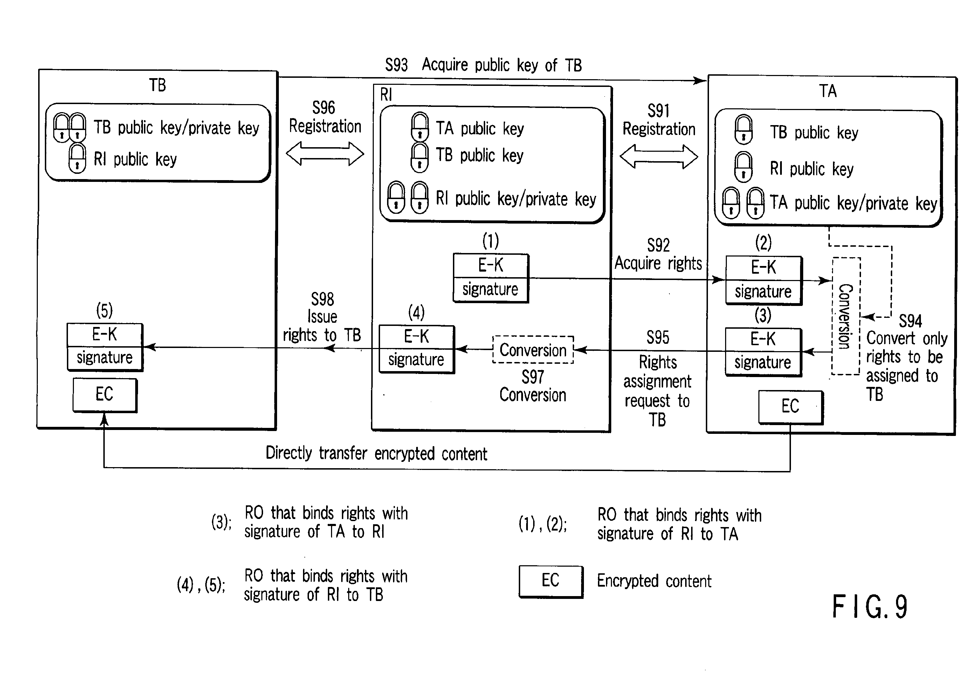

FIG. 9 shows the operation procedure of the first example.

In step S91, the terminal TA executes registration processing in the rights server RI. The terminal TA and rights server RI exchange each other's public keys. After confirming each other's validity, the terminal TA acquires the rights object RO from the rights server RI in step S92. At this time, the rights object RO binds rights information with the signature of the rights server RI to the terminal TA, as indicated by (1) and (2) in FIG. 9. A storage unit 16 stores the acquired rights object RO together with separately acquired encrypted content EC. The above-described processing is done via the communication network NW.

Assume that in this state, the terminal TA changes its model, the user operates an input device 143 of the terminal TA to input a request to move (assign) the copyrighted content to the terminal TB. The terminal TA connects to the terminal TB of the moving destination via a signal cable CB or local communication. In step S93, registration processing is executed between the terminals TA and TB. They exchange each other's terminal public keys. After confirming each other's validity, the terminal TA converts the rights object RO as the moving target, i.e., the rights object RO (2) that binds the rights information with the signature of the rights server RI to the terminal TA into a rights object RO to request the rights server RI to transfer to the terminal TB in step S94.

In this conversion processing, the key encryption key K_{REK} + MAC key K_{MAC} of the rights object RO ((2) in FIG. 9) as the moving target are re-encrypted by a public key K_{PUB_RI} of the rights server RI of the transfer destination, the rights information is rewritten to only rights information to be assigned to the terminal TB, and the signature of a private key K_{PRI_A} of the terminal TA for the rewritten rights information is generated. A rights object RO (3) that binds the rights information with the signature of the terminal TA to the rights server RI is thus generated.

Upon completing the conversion processing, the terminal TA transfers the converted rights object RO to the rights server RI via the communication network NW and requests the rights server RI to assign the rights object to the terminal TB in step S95.

Upon receiving the assignment request, the rights server RI executes registration processing in the terminal TB of the assignment destination, and the rights server RI and terminal TB exchange each other's public keys in step S96. After confirming each other's validity, the rights server RI converts the rights object RO (3) sent from the terminal TA, i.e., the rights object that binds the rights information with the signature of the terminal TA to the rights server RI into the rights object RO for the terminal TB in step S97.

In this conversion processing, the key encryption key K_{REK} + MAC key K_{MAC} of the rights object RO ((3) in FIG. 9) as the moving target are re-encrypted by a public key K_{PUB_B} of the terminal TB of the assignment destination, and the signature of the rights information is changed from the signature by the private key K_{PRI_A} of the terminal TA to a signature by the rights server RI. A rights object RO (4) that binds the rights information with the signature of the rights server RI to the terminal TB is thus generated.

Upon completing the conversion processing, the rights server RI transmits the generated rights object RO (4) to the terminal TB of the assignment destination via the communication network NW in step S98. On the other hand, the encrypted content EC is transferred directly from the terminal TA of the assignment source to the terminal TB via the signal cable CB, local communication, or memory card. The terminal TB stores, in the storage unit 16, the encrypted content EC transferred from the terminal TA and the rights object RO (5) sent from the rights server RI. The copyrighted content is thus assigned via the rights server RI. From then on, the terminal TB can play the copyrighted content.

### (2) Second Example

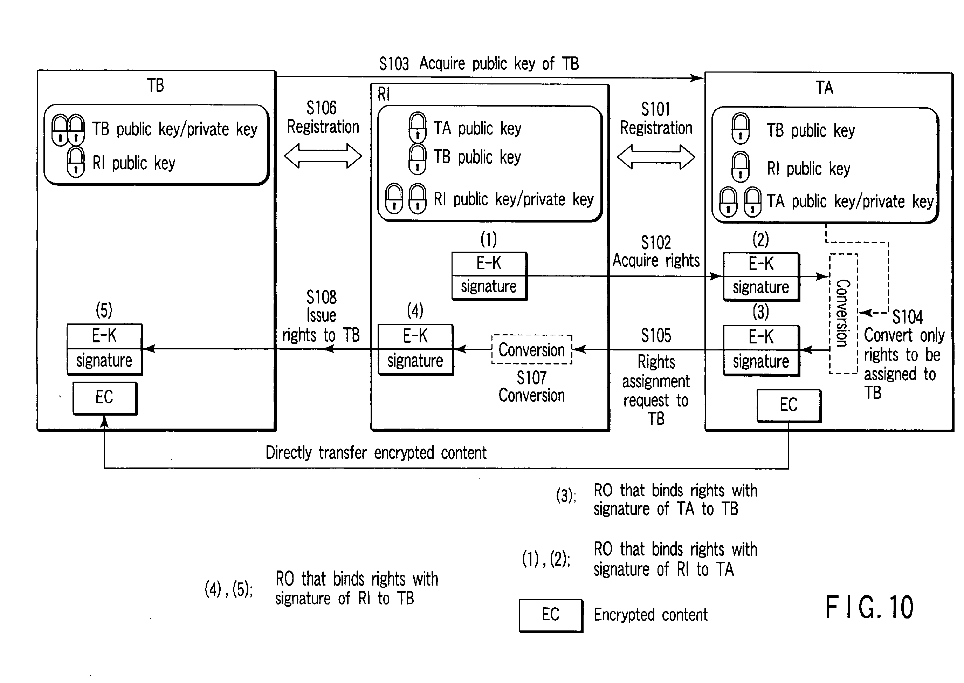

FIG. 10 shows the operation procedure of the second example.

In step S101, the terminal TA executes registration processing in the rights server RI. The terminal TA and rights server RI exchange each other's public keys. After confirming each other's validity, the terminal TA acquires the rights object RO from the rights server RI in step S102. At this time, the rights object RO binds rights information with the signature of the rights server RI to the terminal TA, as indicated by (1) and (2) in FIG. 10. The storage unit 16 stores the acquired rights object RO together with the separately acquired encrypted content EC. The above-described processing is done via the communication network NW.

Assume that in this state, the user inputs, from the input device 143, a request to move the copyrighted content to the terminal TB. The terminal TA connects to the terminal TB of the moving destination via the signal cable CB or local communication. In step S103, registration processing is executed between the terminals TA and TB. They exchange each other's terminal public keys. After confirming each other's validity, the terminal TA converts the rights object RO as the moving target, i.e., the rights object RO (2) that binds the rights information with the signature of the rights server RI to the terminal TA into a rights object RO to request the rights server RI to transfer in step S104.

In this conversion processing, the key encryption key K_{REK} of the rights object RO ((2) in FIG. 10) as the moving target is re-encrypted by the public key K_{PUB_B} of the terminal TB of the assignment destination, the rights information is rewritten to only rights information to be assigned to the terminal TB, and the signature of the private key K_{PRI_A} of the terminal TA for the rewritten rights information is generated. A rights object RO (3) that binds the rights information with the signature of the terminal TA to the terminal TB is thus generated.

Upon completing the conversion processing, the terminal TA transfers the converted rights object RO to the rights server RI via the communication network NW and requests the rights server RI to assign the rights object to the terminal TB in step S105.

Upon receiving the assignment request, the rights server RI executes registration processing in the terminal TB of the assignment destination, and the rights server RI and terminal TB exchange each other's public keys in step S106. After confirming each other's validity, the rights server RI converts the rights object RO sent from the terminal TA, i.e., the rights object RO (3) that binds the rights information with the signature of the terminal TA to the terminal TB into the rights object RO for the terminal TB in step S107.

In this conversion processing, only processing of changing the signature of the rights information of the rights object RO ((3) in FIG. 10) as the moving target from the signature by the private key K_{PRI_A} of the terminal TA to a signature by the rights server RI is executed. A rights object RO (4) that binds the rights information with the signature of the rights server RI to the terminal TB is thus generated.

Upon completing the conversion processing, the rights server RI transmits the generated rights object RO (4) to the terminal TB of the assignment destination via the communication network NW in step S108. On the other hand, the encrypted content EC is transferred directly from the terminal TA of the assignment source to the terminal TB via the signal cable CB, local communication, or a storage medium such as a memory card, as in the first example. The terminal TB stores, in the storage unit 16, the encrypted content EC transferred from the terminal TA and the rights object RO (5) sent from the rights server RI. The copyrighted content is thus assigned via the rights server RI. From then on, the terminal TB can play the copyrighted content.

### (3) Third Example

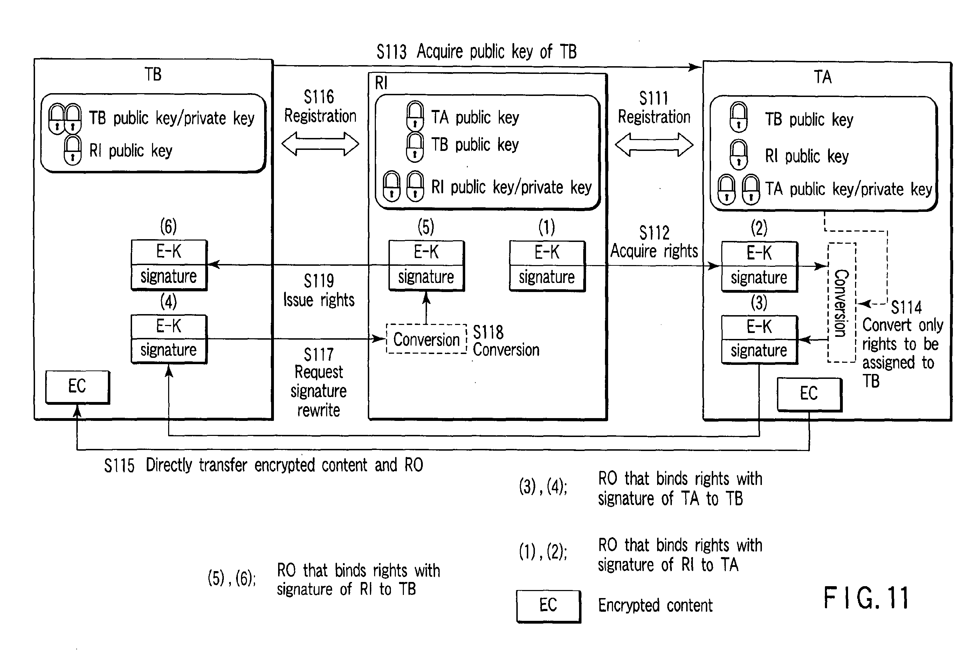

FIG. 11 shows the operation procedure of the third example.

In step S111, the terminal TA executes registration processing in the rights server RI. The terminal TA and rights server RI exchange each other's public keys. After confirming each other's validity, the terminal TA acquires the rights object RO from the rights server RI in step S112. At this time, the rights object RO binds rights information with the signature of the rights server RI to the terminal TA, as indicated by (1) and (2) in FIG. 11. The storage unit 16 stores the acquired rights object RO together with the separately acquired encrypted content EC. The above-described processing is done via the communication network NW.

Assume that in this state, the user inputs, from the input device 143, a request to move the copyrighted content to the terminal TB. The terminal TA connects to the terminal TB of the moving destination via the signal cable CB or local communication. In step S113, registration processing is executed between the terminals TA and TB. They exchange each other's terminal public keys. After confirming each other's validity, the terminal TA converts the rights object RO as the moving target, i.e., the rights object RO (2) that binds the rights information with the signature of the rights server RI to the terminal TA into a rights object RO for which it is necessary to request the rights server RI to only rewrite the signature in step S114.

In this conversion processing, the key encryption key K_{REK} of the rights object RO ((2) in FIG. 11) as the moving target is re-encrypted by the public key K_{PUB_B} of the terminal TB of the assignment destination, the rights information is rewritten to only rights information to be assigned to the terminal TB, and the signature of the private key K_{PRI_A} of the terminal TA for the rewritten rights information is generated. A rights object RO (3) that binds the rights information with the signature of the terminal TA to the terminal TB is thus generated.

Upon completing the conversion processing, the terminal TA directly transfers the encrypted content EC and the converted rights object RO to the terminal TB of the assignment destination in step S115 via the signal cable CB, local communication, or a storage medium such as a memory card. The terminal TB confirms the necessity of signature rewrite request to the rights server RI.

Upon confirming the necessity of signature rewrite, the terminal TB executes registration processing in the rights server RI in step S116. The terminal TB and rights server RI exchange each other's public keys. After confirming each other's validity, the terminal TB transmits, to the rights server RI via the communication network NW, the rights object RO (4) transferred from the terminal TA and also transmits the rights rewrite request of the rights object RO (4) in step S117.

Upon receiving the rights rewrite request from the terminal TB, the rights server RI converts the rights object RO (4) received simultaneously, i.e., the rights object RO (4) that binds the rights information with the signature of the terminal TA to the terminal TB into the rights object RO for the terminal TB.

In this conversion processing, only processing of changing the signature of the rights information of the rights object RO ((4) in FIG. 11) as the moving target from the signature by the private key K_{PRI A} of the terminal TA to a signature by the private key of the rights server RI is executed. A rights object RO (5) that binds the rights information with the signature of the rights server RI to the terminal TB is thus generated.

Upon completing the conversion processing, the rights server RI transmits the generated rights object RO (5) to the terminal TB of the assignment destination via the communication network NW in step S119. The terminal TB stores, in the storage unit 16, the encrypted content EC transferred from the terminal TA and the rights object RO (6) sent from the rights server RI. The copyrighted content is thus assigned via the rights server RI. From then on, the terminal TB can play the copyrighted content.

### (4) Fourth Example

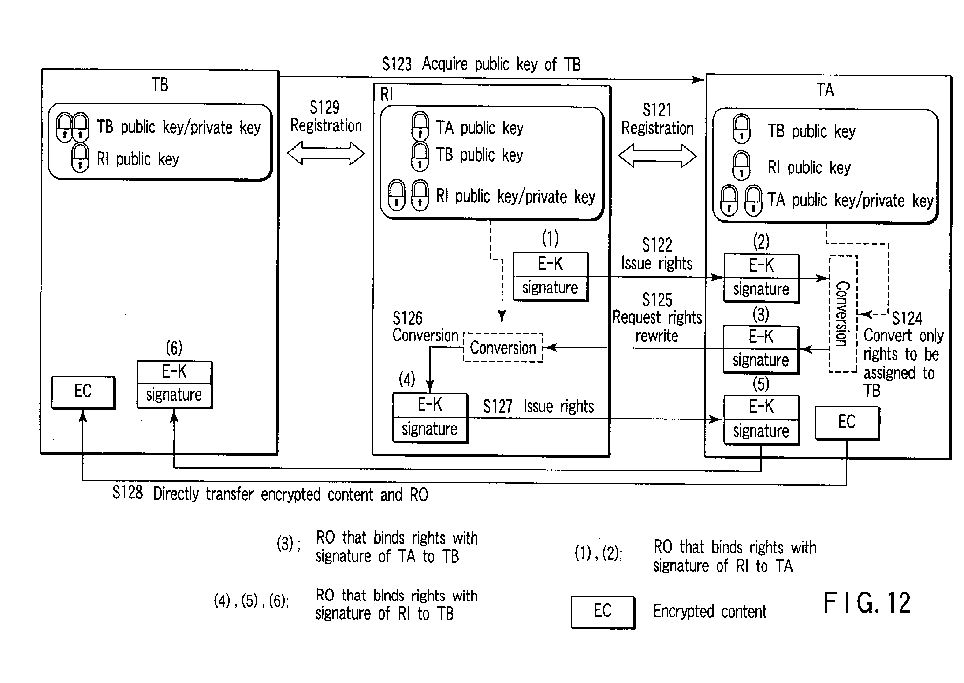

FIG. 12 shows the operation procedure of the fourth example.

In step S121, the terminal TA executes registration processing in the rights server RI. The terminal TA and rights server RI exchange each other's public keys. After confirming each other's validity, the terminal TA acquires the rights object RO from the rights server RI in step S122. At this time, the rights object RO binds rights information with the signature of the rights server RI to the terminal TA, as indicated by (1) and (2) in FIG. 12. The storage unit 16 stores the acquired rights object RO together with the separately acquired encrypted content EC. The above-described processing is done via the communication network NW.

Assume that in this state, the user inputs, from the input device 143, a request to move the copyrighted content to the terminal TB. The terminal TA connects to the terminal TB of the moving destination via the signal cable CB or local communication. In step S123, registration processing is executed between the terminals TA and TB. They exchange each other's terminal public keys. After confirming each other's validity, the terminal TA converts the rights object RO as the moving target, i.e., the rights object RO (2) that binds the rights information with the signature of the rights server RI to the terminal TA into a rights object RO for the terminal TB of the moving destination (assignment destination) in step S124.

In this conversion processing, the key encryption key K_{REK} of the rights object RO ((2) in FIG. 12) as the moving target is re-encrypted by the public key K_{PUB_B} of the terminal TB of the assignment destination, the rights information is rewritten to only rights information to be assigned to the terminal TB, and the signature of the private key K_{PRI}__{A} of the terminal TA for the rewritten rights information is generated. A rights object RO (3) that binds the rights information with the signature of the terminal TA to the terminal TB is thus generated.

Upon completing the conversion processing, the terminal TA transfers the converted rights object RO to the rights server RI via the communication network NW and requests the rights server RI to replace the signature of the rights object RO in step S125.

Upon receiving the signature replacement request, the rights server RI converts the rights object RO sent from the terminal TA, i.e., the rights object RO (3) that binds the rights information with the signature of the terminal TA to the terminal TB into a rights object RO for the terminal TB in step S126.

In this conversion processing, only processing of changing the signature of the rights information of the rights object RO ((3) in FIG. 12) as the moving target from the signature by the private key K_{PRI_A} of the terminal TA to a signature by the private key of the rights server RI is executed. A rights object RO (4) that binds the rights information with the signature of the rights server RI to the terminal TB is thus generated.

Upon completing the conversion processing, the rights server RI returns the generated rights object RO (4) to the terminal TA of the assignment source via the communication network NW in step S127. Upon receiving the rights object RO (4) with the rewritten signature, the terminal TA transfers the returned rights object RO (5) and encrypted content EC to the terminal TB of the assignment destination via the signal cable CB.

The terminal TB stores, in the storage unit 16, the encrypted content EC and the rights object RO (6) transferred from the terminal TA. Additionally, the terminal TB executes registration processing in the rights server RI, and they exchange each other's public keys. The copyrighted content is thus assigned from the terminal TA to the terminal TB via the rights server RI. From then on, the terminal TB can play the copyrighted content.

### (5) Fifth Example

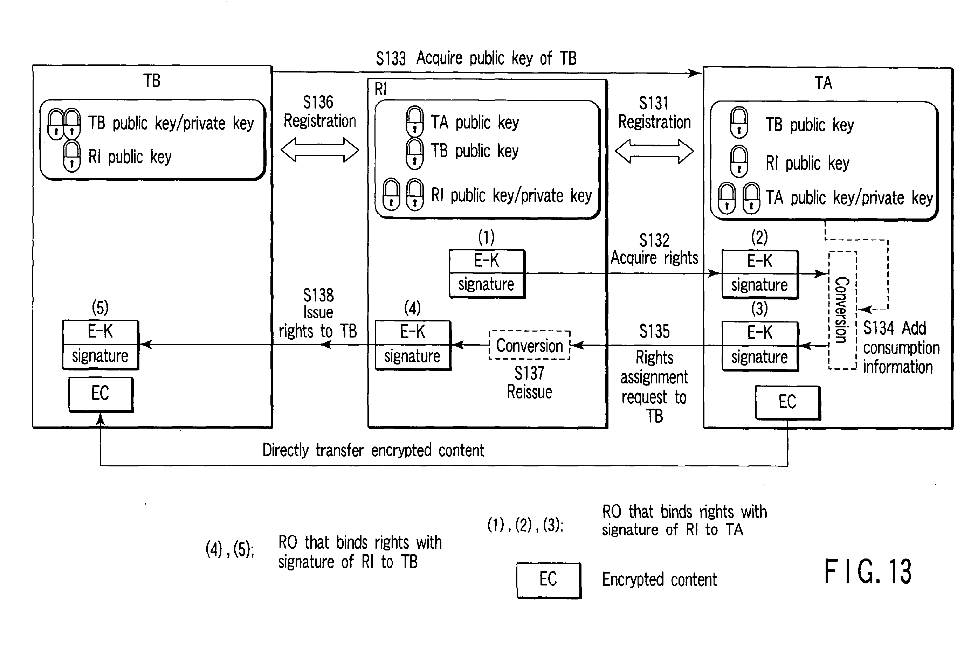

FIG. 13 shows the operation procedure of the fifth example.

In step S131, the terminal TA executes registration processing in the rights server RI. The terminal TA and rights server RI exchange each other's public keys. After confirming each other's validity, the terminal TA acquires the rights object RO from the rights server RI in step S132. At this time, the rights object RO binds rights information with the signature of the rights server RI to the terminal TA, as indicated by (1) and (2) in FIG. 13. The storage unit 16 stores the acquired rights object RO together with the separately acquired encrypted content EC. The above-described processing is done via the communication network NW.

Assume that in this state, the user operates the input device 143 of the terminal TA to input a request to move (assign) the copyrighted content to the terminal TB. The terminal TA connects to the terminal TB of the moving destination via the signal cable CB or local communication. In step S133, registration processing is executed between the terminals TA and TB. They exchange each other's terminal public keys. After confirming each other's validity, the terminal TA converts the rights object RO as the moving target, i.e., the rights object RO (2) that binds the rights information with the signature of the rights server RI to the terminal TA into a rights object RO (3) to request the rights server RI to transfer to the terminal TB in step S134.

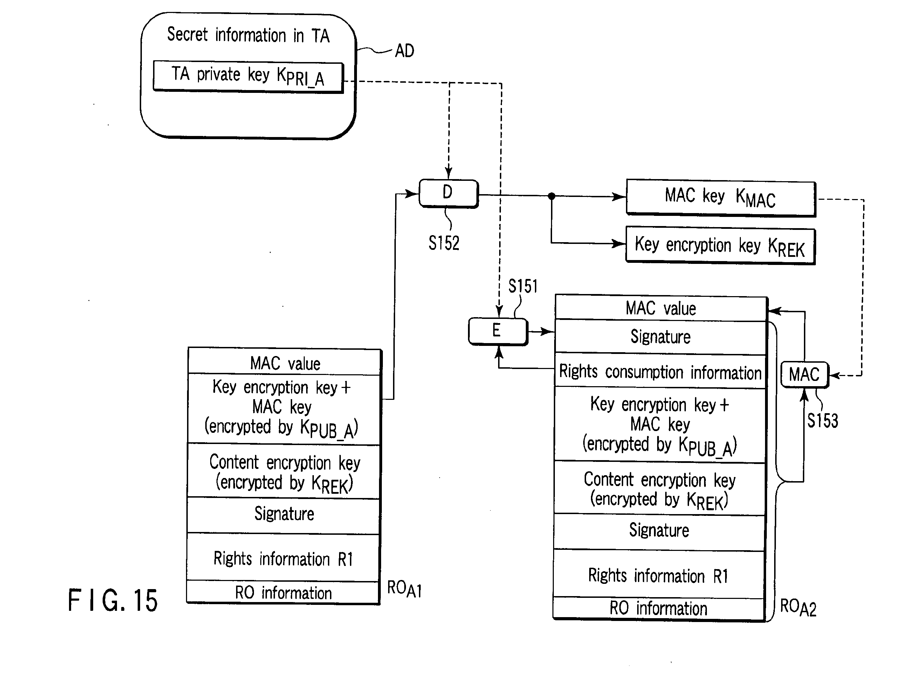

If the rights object RO is Stateful, and the rights are partially consumed, or if only partial rights are to be assigned to the terminal TB, rights consumption information is added to the rights object RO (2). Rights object RO conversion processing with addition of rights consumption information is executed in the following way. FIG. 15 is a view showing the processing procedure. If no rights consumption information is to be added, the rights object RO conversion processing is unnecessary.

A control unit 15 of the terminal TA adds rights consumption information to a rights object RO_{A2} of the assignment destination. In step S151, the control unit 15 generates a signature for the added rights consumption information on the basis of the private key K_{PRI_A} of the terminal TA, which is saved as secret information in the terminal TA, and adds the signature of the terminal TA to the rights object RO_{A2}- In step S152, the control unit 15 of the terminal TA decrypts the key encryption key K_{REK} + MAC key K_{MAC}, which are encrypted by the public key K_{PUB_A} of the terminal TA and contained in the rights object RO_{A1} of the assignment source, on the basis of the private key K_{PRI_A} of the terminal TA saved as the secret information in the terminal TA. In step S153, the control unit 15 recalculates the MAC value for the constituent elements of the rights object RO_{A2} of the assignment destination, which has the added rights consumption information and signature, on the basis of the decrypted MAC key K_{MAC}. The recalculated MAC value is added to the rights object RO_{A2}.

Upon completing the conversion processing from the rights object RO (2) to the rights object RO (3), the terminal TA transfers the converted rights object RO (3) to the rights server RI via the communication network NW and requests the rights server RI to assign the rights object to the terminal TB in step S135.

Upon receiving the assignment request, the rights server RI executes registration processing in the terminal TB of the assignment destination, and the rights server RI and terminal TB exchange each other's public keys in step S136. After confirming each other's validity, the rights server RI converts the rights object RO (3) sent from the terminal TA, i.e., the rights object RO that binds the rights information with the signature of the rights server RI to the terminal TA into a rights object RO (4) for the terminal TB in step S137.

Two methods are available for this conversion processing.

### (2-1) First Conversion Method

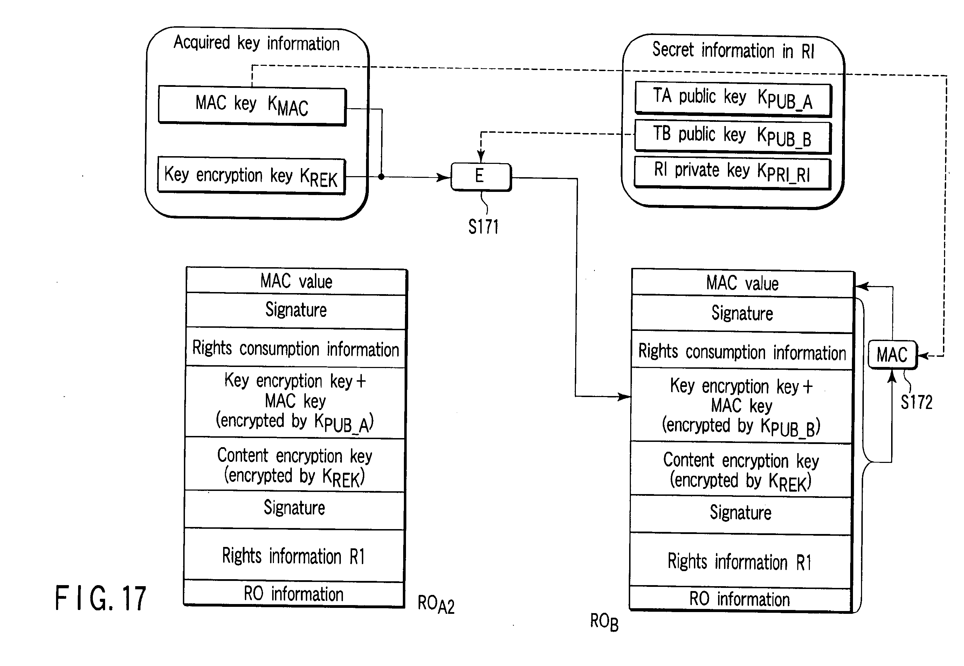

FIG. 17 is a view showing the conversion procedure. The CPU 21 of the rights server RI extracts RO information, i.e., ROID added to the rights object RO_{A2} received from the terminal TA. On the basis of the ROID, the CPU 21 accesses the RO management table 26 as shown in FIG. 16 and reads a corresponding key encryption key and MAC key. In step S171, on the basis of the public key K_{PUB_B} of the terminal TB of the assignment destination, which is saved as secret information in the RI, the CPU 21 of the rights server RI encrypts the key encryption key and MAC key read from the RO management table 26. The CPU 21 rewrites the key encryption key and MAC key in a rights object RO_{B} as the assignment target to the encrypted key encryption key and MAC key.

In step S172, the CPU 21 recalculates the MAC value of the elements of the rights object RO_{B} as the assignment target having the rewritten key encryption key and MAC key on the basis of the MAC key read from the RO management table 26. The CPU 21 rewrites the MAC value of the elements of the rights object RO_{B} as the assignment target to the recalculated MAC value.

### (2-2) Second Conversion Method

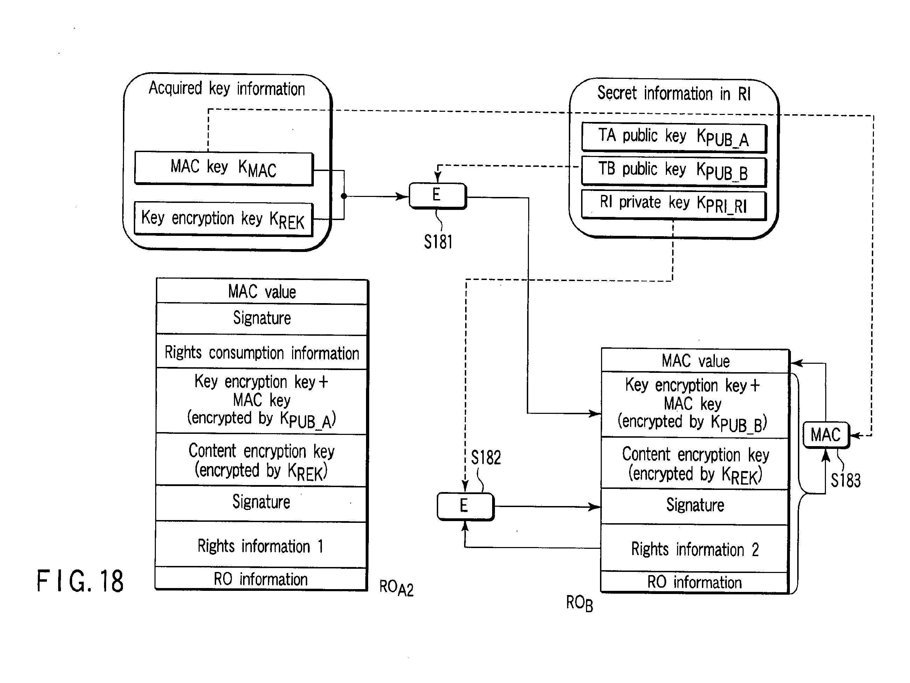

FIG. 18 is a view showing the conversion procedure. The CPU 21 of the rights server RI extracts RO information, i.e., ROID added to the rights object RO_{A2} received from the terminal TA. On the basis of the ROID, the CPU 21 accesses the RO management table 26 as shown in FIG. 16 and reads a corresponding key encryption key and MAC key. In step S181, on the basis of the public key K_{PUB_B} of the terminal TB of the assignment destination, which is saved as secret information in the RI, the CPU 21 of the rights server RI encrypts the key encryption key and MAC key read from the RO management table 26. The CPU 21 rewrites the key encryption key and MAC key in the rights object RO_{B} as the assignment target to the encrypted key encryption key and MAC key.

The CPU 21 generates rights information R2 from rights information R1 and rights consumption information. In step S182, the CPU 21 changes the signature of the existing rights information R2 contained in the rights object RO_{B} as the assignment target on the basis of the private key K_{PRI_RI} of the rights server RI, which is saved as secret information in RI, and adds the changed signature to the rights information R2.

In step S183, the CPU 21 recalculates the MAC value of the elements of the rights object RO_{B} as the assignment target having the rewritten key encryption key and MAC key and changed signature of the existing rights information R2 on the basis of the MAC key read from the RO management table 26. The CPU 21 rewrites the MAC value of the elements of the rights object RO_{B} as the assignment target to the recalculated MAC value.

Upon completing the conversion processing to the rights object RO (4), the rights server RI transmits the generated rights object RO (4) to the terminal TB of the assignment destination via the communication network NW in step S138. On the other hand, the encrypted content EC is transferred directly from the terminal TA of the assignment source to the terminal TB via the signal cable CB. The terminal TB stores, in the storage unit 16, the encrypted content EC transferred from the terminal TA and the rights object RO (5) sent from the rights server RI. The copyrighted content is thus assigned via the rights server RI. The terminal TB can therefore play the copyrighted content.

As described above, in the second embodiment, to move (assign) copyrighted content bound to a terminal from the terminal TA to another terminal TB via the rights server RI, the terminal TA of the assignment source re-encrypts the key encryption key K_{REK} + MAC key K_{MAC} in the rights object RO by using the terminal public key K_{PUB_B} of the terminal TB of the moving destination. Additionally, the rights server RI regenerates the signature of existing rights information or the signature of added rights consumption information on the basis of the private key K_{PRI_RI} of the rights server RI.

Hence, according to the second embodiment, the rights object RO is binding-converted from the terminal TA of the moving source to the terminal TB of the moving destination. Even when the rights information itself changes, or rights consumption information is added, the signature is appropriately regenerated from a signature by the terminal TA to a signature by the rights server RI. It is therefore possible to move the copyrighted content from the terminal TA to the terminal TB via the rights server RI.

The rights server RI has the RO management table 26. Upon receiving a rights object assignment request from the terminal TA of the assignment source, the rights server RI searches the RO management table 26 for a key encryption key and MAC key corresponding to the rights object on the basis of the ROID of the rights object and executes binding conversion processing of the found key encryption key and MAC key of the rights object. Hence, the rights server RI can reissue the rights object of the assignment destination on the basis of past rights object RO element information. That is, the processing in the terminal TA can be reduced.

### (Third Embodiment)

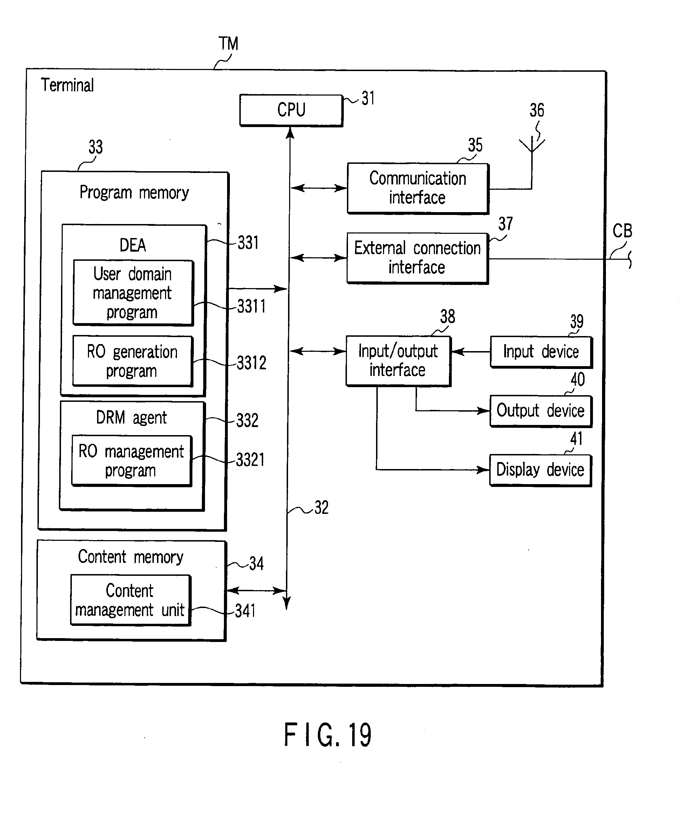

FIG. 19 is a block diagram showing the functional arrangement of an information terminal apparatus according to the third embodiment of the present invention. An information terminal (to be referred to as a terminal hereinafter) TM includes, e.g., a mobile phone, a mobile terminal such as a Personal Digital Assistant (PDA), or a personal computer. The terminal TM can access a content server (not shown) via a communication network. The terminal TM downloads desired content from the content server and stores it in a memory device such as a hard disk drive. A communication network NW includes, e.g., an Internet Protocol (IP) network represented by the Internet and a plurality of access networks to access the IP network. A cable subscriber network using, e.g., a digital subscriber line (DSL) and optical transmission line, a wireless local area network (LAN), and a mobile communication network are used as the access networks. The terminal TM can connect to another terminal via a signal cable CB such as a universal serial bus (USB) cable. The other terminal also includes a mobile terminal or personal computer.

The terminal TM comprises a central processing unit (CPU) 31. A program memory 33 and a content memory 34 connect to the CPU 31 via a bus 32. A communication interface 35, external connection interface 37, and input/output interface 38 also connect to the CPU 31.

The communication interface 35 connects to an antenna 36 to execute wireless communication with a base station (not shown). The communication interface 35 also communicates with a content server via the base station to download content. For example, a Transmission Control Protocol/Internet Protocol (TCP/IP) is used as the communication protocol. The external connection interface 37 has, e.g., a USB interface function and transfers, e.g., encrypted content to another terminal via the signal cable CB. An input device 39, output device 40, and display device 41 connect to the input/output interface 38. The input device 39 includes a plurality of function keys and a key pad. A user uses the input device 39 to input commands related to communication and content play. The output device 40 has a speaker and outputs an audio signal decoded by an audio decoder provided in the input/output interface 38. The display device 41 includes a liquid crystal display and displays various kinds of information necessary for the communication operation of the terminal and related to play of content.

The program memory 33 includes a hard disk or a nonvolatile memory such as a ROM and stores a domain enforcement agent (DEA) 331 and a digital rights management (DRM) agent 332 as control application programs according to the present invention.

The DRM agent 332 has an RO management program 3321. Copyrighted content downloaded from the content server contains content and rights object RO. The RO management program 3321 causes the CPU 31 to manage the rights object RO. To play the content, the RO management program 3321 causes the CPU 31 to decrypt the rights object RO and the encrypted content.

The DEA 331 is an entity that shares a policy (domain policy) for a user domain in place of a domain authority (DA). The DEA 331 has a user domain management program 3311 and an RO generation program 3312. The user domain management program 3311 causes the CPU 31 to execute processing related to user domain member management and user domain key issue. The RO generation program 3312 causes the CPU 31 to generate or regenerate the rights object RO in dividing or merging user domains. The domain policy indicates an attribute group including the number of terminals using the same user domain, the life of a user domain, and permission/inhibition of user domain division/merger.

The content memory 34 uses, e.g., a hard disk or NAND flash memory as a storage medium and comprises a content management unit 341. The content management unit 341 encrypts and stores content contained in the rights object RO that includes the content and rights object RO.

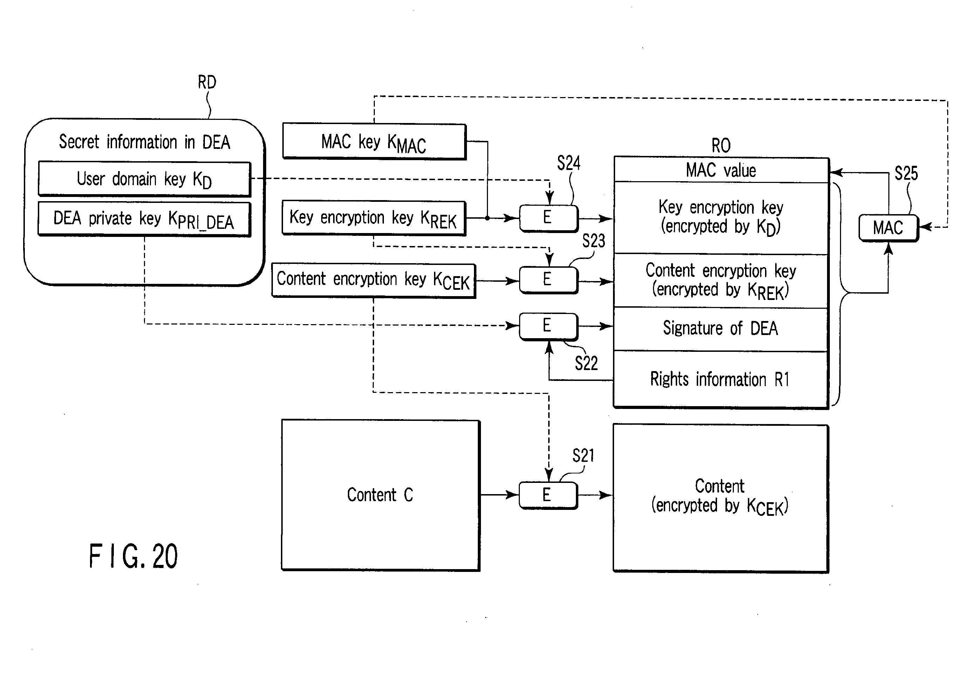

The content stored in the content management unit 341 and the rights object RO for a user domain stored in the program memory 33 have the following structures. FIG. 20 is a view showing the encryption format.

In step S21, content C is encrypted by a content encryption key K_{CEK} and stored in the content management unit 341. In step S23, the content encryption key K_{CEK} is encrypted by a key encryption key K_{REK}. In step S24, the key encryption key K_{REK} is encrypted together with the MAC key K_{MAC} by a user domain key K_{D} managed as secret information DS0 in DEA. The content encryption key K_{CEK} and key encryption key K_{REK} are generated on the basis of random numbers. In step S22, the signature of the rights holder of rights information is generated on the basis of a DEA private key K_{PRI_DEA} managed as the secret information DS0 in DEA.

The key encryption key K_{REK} may be generated by using not a random number but information (e.g., device number or telephone number) unique to the terminal.

The rights object RO contains the rights information, the signature, the content encryption key K_{CEK} encrypted by the key encryption key K_{REK}, and the key encryption key K_{REK} and MAC key K_{MAC} encrypted by the user domain key K_{D}. The RO management program 3321 stores the rights object RO. A message authentication code (MAC) value is added to the rights object RO. The MAC value is calculated in step S25 on the basis of the elements contained in the rights object RO. The presence/absence of alteration of the rights object can be verified by calculating the MAC value except that of the rights object RO by using the MAC key K_{MAC} and determining whether the calculated value matches the MAC value added to the rights object RO.

The operation of the terminal TM having the above-described arrangement will be described next.

### (1) First Example of User Domain Division/Merger

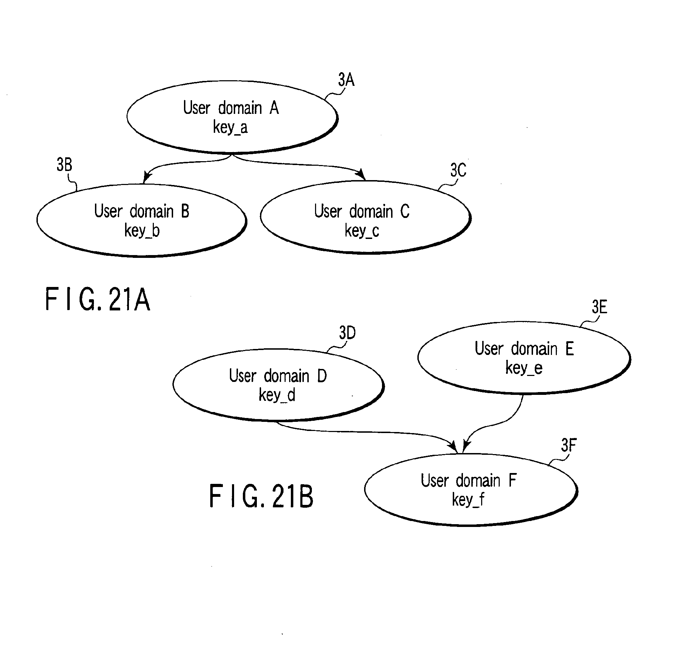

In this example, a new user domain key is used to divide/merge user domains. For example, as shown in FIGS. 21A and 21B, to divide a user domain A (3A) using a user domain key key_a into user domains B (3B) and C (3C), new user domain keys key_b and key_c are used. To merge user domains D (3D) and E (3E) using user domain keys key_d and key_e, respectively, into one user domain F (3F), a new user domain key key_f is used.

### (1-1) Generation of Rights Object RO (Without Change in Rights Information)

The program memory 33 of the terminal TM stores, as secret information DS1 in DEA, a new user domain key K_{D2} to be used for user domain division/merger in addition to an active user domain key K_{D1}. The program memory 33 also stores the DEA private key K_{PRI_DEA}.

To generate a new rights object RO_{B} based on a rights object RO_{A} without changing details of rights information upon user domain division/merger, the terminal changes only the key encryption key K_{REK} + MAC key K_{MAC} and the MAC value of the elements contained in the rights object RO_{A}.

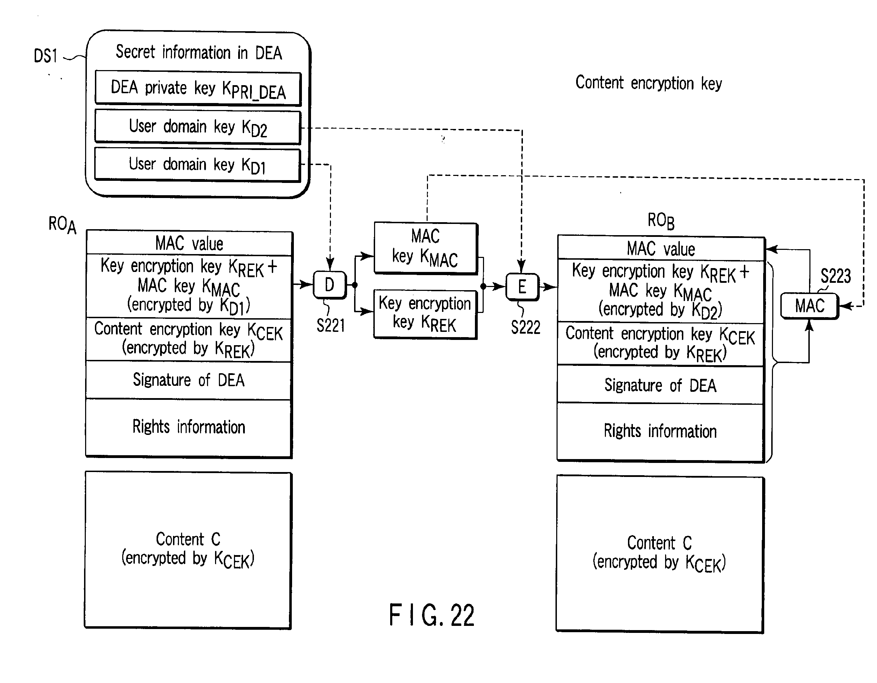

As shown in FIG. 22, the CPU 31 of the terminal temporarily decrypts the encrypted key encryption key K_{REK} + MAC key K_{MAC} in the rights object RO_{A} by using the active user domain key K_{D1} in step S221. In step S222, the decrypted key encryption key K_{REK} + MAC key K_{MAC} are re-encrypted on the basis of the new user domain key K_{D2} and added to the new rights object RO_{B} as a constituent element. In step S223, the CPU 31 recalculates the MAC value of the new rights object RO_{B} on the basis of the decrypted MAC key K_{MAC} and adds the recalculated MAC value to the new rights object RO_{B}.

### (1-2) Generation of Rights Object RO (With Change in Rights Information)

To generate a new rights object RO_{B} based on a rights object RO_{A} upon user domain division/merger, the terminal changes the key encryption key K_{REK} + MAC key K_{MAC} and the MAC value of the elements contained in the rights object RO_{A}- If details of rights information R2 after division/merger change from those of rights information R1 before merger, the terminal changes the signature of the rights holder of the rights information R2 after change.

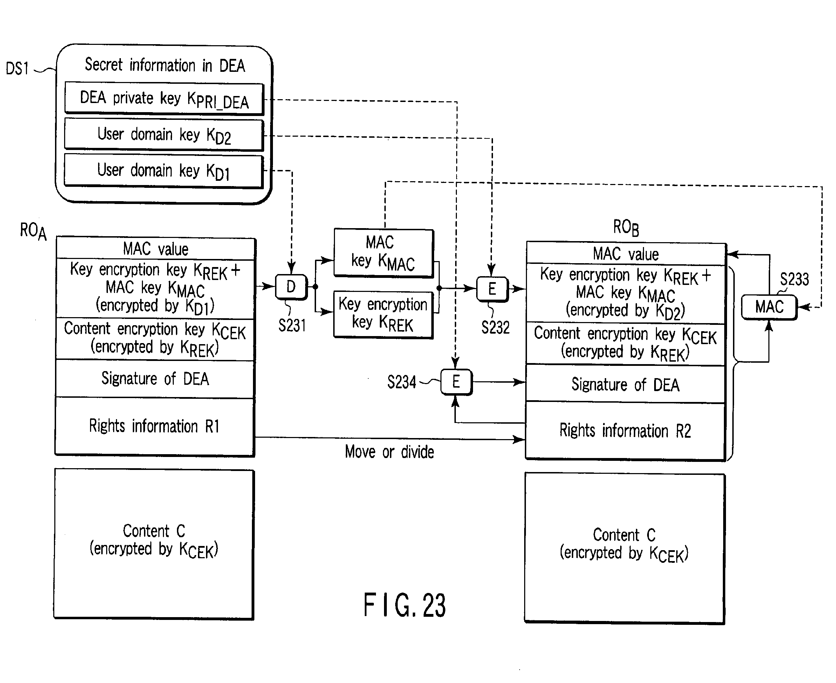

As shown in FIG. 23, the CPU 31 of the terminal decrypts the encrypted key encryption key K_{REK} + MAC key K_{MAC} in the rights object RO_{A} by using the active user domain key K_{D1} in step S231. In step S232, the decrypted key encryption key K_{REK} + MAC key K_{MAC} are re-encrypted on the basis of the new user domain key K_{D2} and added to the new rights object RO_{B} as a constituent element.

The CPU 31 generates the rights information R2 by moving or dividing part of the rights information R1 in the rights object RO_{A}. In step S234, the CPU 31 regenerates the signature of the rights holder of the rights information R2 after change on the basis of the DEA private key K_{PRI_DEA} managed as the secret information DS1 in DEA and adds the signature to the new rights object RO_{B}.

In step S233, the CPU 31 recalculates the MAC value for the constituent elements of the new rights object RO_{B} on the basis of the decrypted MAC key K_{MAC} and adds the recalculated MAC value to the new rights object RO_{B}.

### (2) Second Example of User Domain Division/Merger

In this example, upon dividing a user domain, a plurality of user domain keys prepared in advance are assigned to divided user domains. Upon merging user domains, user domain keys used in the plurality of user domains before merger are assigned to the merged user domain.

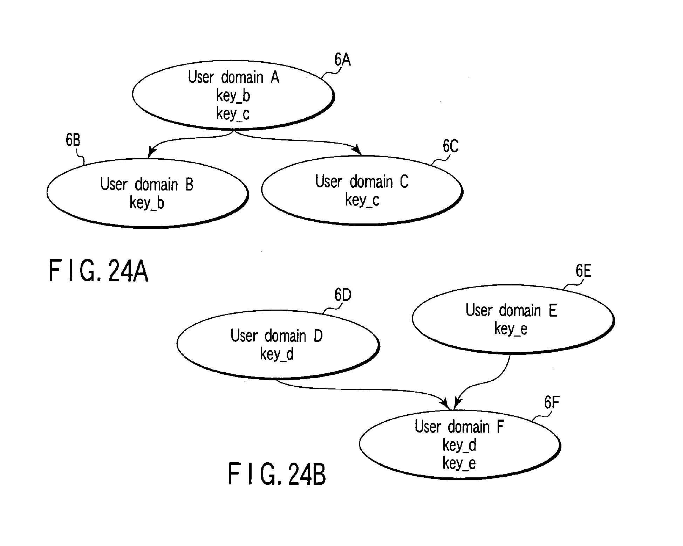

For example, as shown in FIGS. 24A and 24B, to divide a user domain A (6A) using two user domain keys key_b and key_c into user domains B (6B) and C (6C), the user domain keys key_b and key_c are assigned to the divided user domains B and C, respectively. To merge user domains D 6D and E 6E using user domain keys key_d and key_e into one user domain F 6F, the user domain keys key_d and key_e used in the user domains D and E before merger are assigned to the merged user domain F 6F.

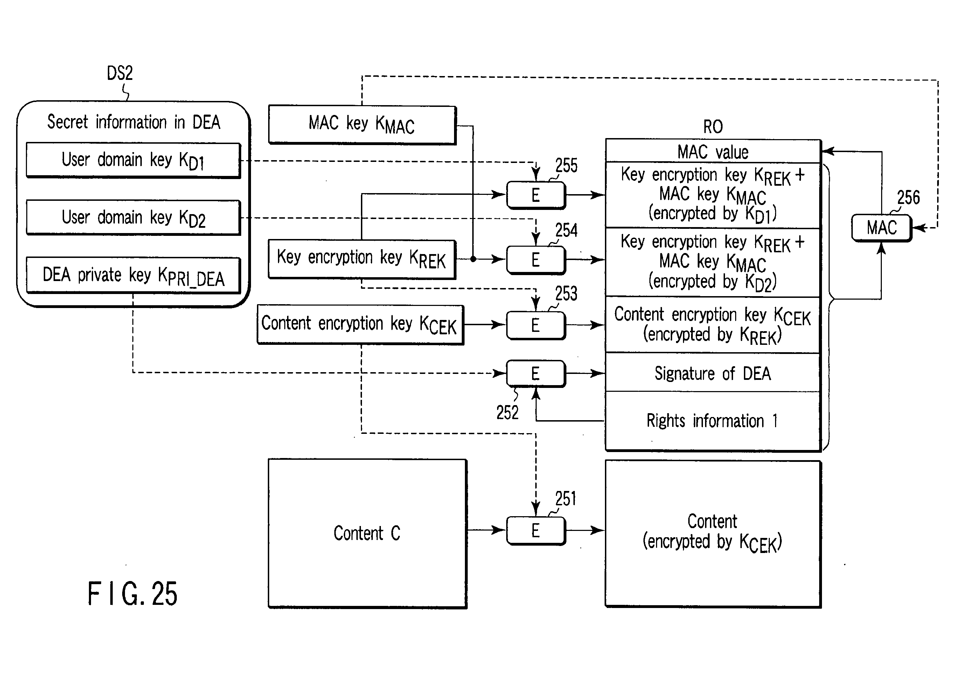

The encryption format of the rights object RO valid for a plurality of user domains has, e.g., the following structure. FIG. 25 is a view showing the structure. In step S251, the content C is encrypted by the content encryption key K_{CEK} and stored in the content management unit 341. In step S253, the content encryption key K_{CEK} is encrypted by the key encryption key K_{REK}. In steps S254 and S255, the key encryption key K_{REK} is encrypted together with the MAC key K_{MAC} by the two different user domain keys K_{D1} and K_{D2} managed as secret information DS2 in DEA. The content encryption key K_{CEK} and key encryption key K_{REK} are generated on the basis of random numbers. In step S252, the signature of the rights holder of rights information is generated on the basis of the DEA private key K_{PRI_DEA} managed as the secret information DS2 in DEA.

The rights object RO contains the rights information, the signature, the content encryption key K_{CEK} encrypted by the key encryption key K_{REK}, and the key encryption keys K_{REK} and MAC keys K_{MAC} encrypted by the user domain keys K_{D1} and K_{D2}. The RO management program 3321 stores the rights object RO. A message authentication code (MAC) value is added to the rights object RO. The MAC value is calculated in step S256 on the basis of the elements contained in the rights object RO.

### (2-1) Generation of Rights Object upon Merging User Domains (Without Change in Rights Information)

The program memory 33 of the terminal TM stores, as the secret information DS2 in DEA, the user domain key K_{D2} for user domain merger in addition to the active user domain key K_{D1}. The program memory 33 also stores the DEA private key K_{PRI_DEA·}

In merging two user domains into one user domain, the terminal re-encrypts the key encryption key K_{REK} + MAC key K_{MAC} of the rights object RO_{A}, which are encrypted by the user domain key K_{D1}, by using the user domain key K_{D2} and adds the re-encrypted key encryption key K_{REK} + MAC key K_{MAC} to the new rights object RO_{B} after merger so as to validate both the user domain keys used in the user domains before merger.

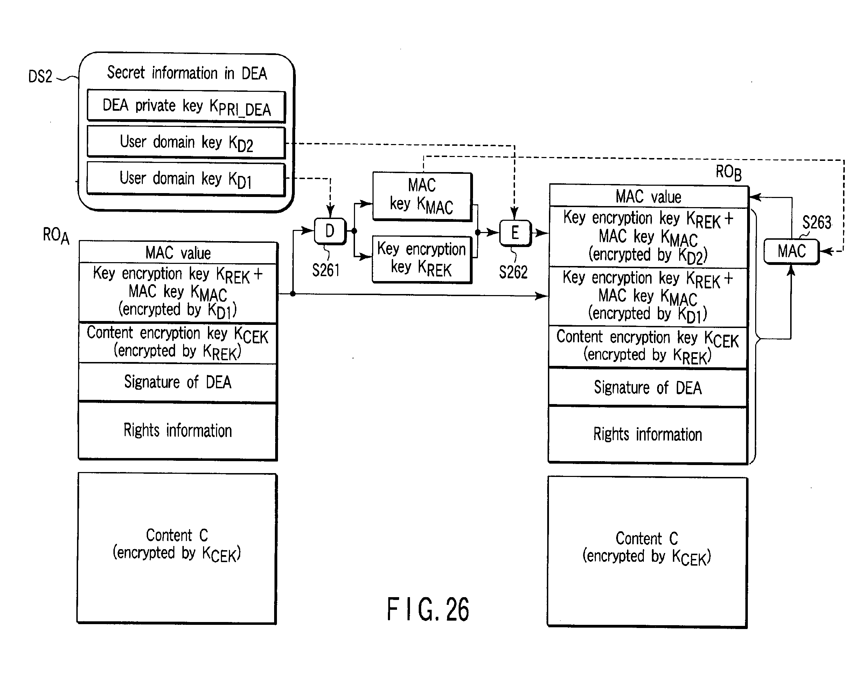

More specifically, as shown in FIG. 26, the CPU 31 copies the key encryption key K_{REK} + MAC. key K_{MAC} encrypted by the user domain key K_{D1} and contained in the rights object RO_{A} to the new rights object RO_{B} after merger. Simultaneously in step S261, the key encryption key K_{REK} + MAC key K_{MAC} encrypted by the user domain key K_{D1} are decrypted by using the user domain key K_{D1} of the secret information DS2 in DEA. In step S262, the CPU 31 re-encrypts the decrypted key encryption key K_{REK} + MAC key K_{MAC} by using the user domain key K_{D2} of the secret information DS2 in DEA and adds the key encryption key K_{REK} + MAC key K_{MAC} re-encrypted by the user domain key K_{D2} to the new rights object RO_{B} after merger. In step S263, the CPU 31 recalculates the MAC value for the constituent elements of the new rights object RO_{B} after merger on the basis of the MAC key K_{MAC} decrypted in step S261 and adds the recalculated MAC value to the rights object RO_{B}.

### (2-2) Generation of Rights Object upon Merging User Domains (With Change in Rights Information)

In merging two user domains into one user domain, the terminal re-encrypts the key encryption key K_{REK} + MAC key K_{MAC} of the rights object RO_{A}, which are encrypted by the user domain key K_{D1}, by using the user domain key K_{D2} and adds the re-encrypted key encryption key K_{REK} + MAC key K_{MAC} to the new rights object RO_{B} after merger so as to validate both the user domain keys used in the user domains before merger. If details of rights information change before and after merger, the terminal changes the signature of the rights holder of the rights information R2 after change.

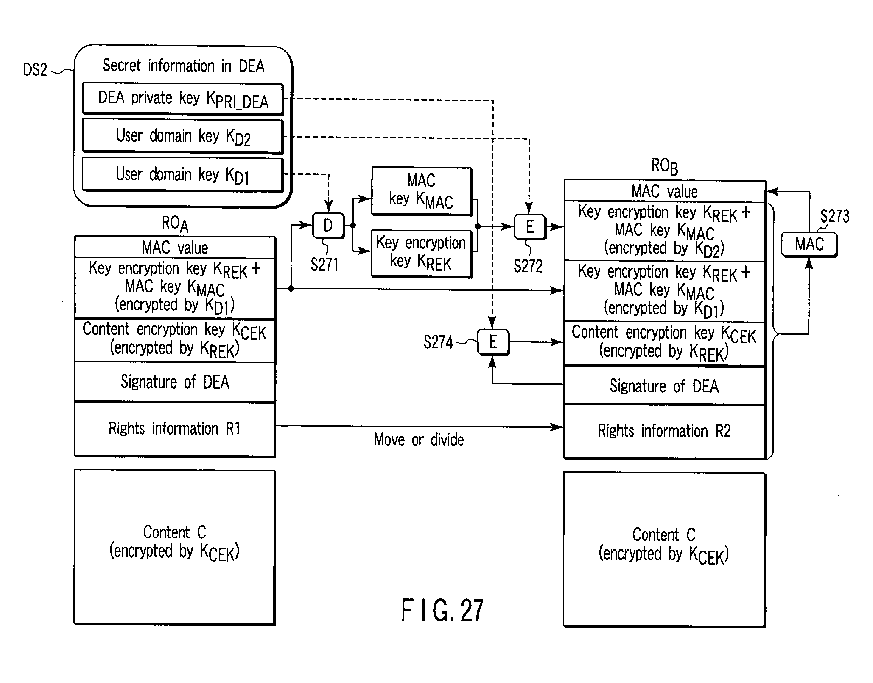

More specifically, as shown in FIG. 27, the CPU 31 of the terminal copies the key encryption key K_{REK} + MAC key K_{MAC} encrypted by the user domain key K_{D1} and contained in the rights object RO_{A} to the new rights object RO_{B} after merger. Simultaneously in step S271, the key encryption key K_{REK} + MAC key K_{MAC} encrypted by the user domain key K_{D1} are decrypted by using the user domain key K_{D1} of the secret information DS2 in DEA. In step S272, the CPU 31 re-encrypts the decrypted key encryption key K_{REK} + MAC key K_{MAC} by using the user domain key K_{D2} of the secret information DS2 in DEA and adds the key encryption key K_{REK} + MAC key K_{MAC} re-encrypted by the user domain key K_{D2} to the new rights object RO_{B} after merger.

The CPU 31 generates the rights information R2 by moving or dividing part of the rights information R1 in the rights object RO_{A}. In step S274, the CPU 31 generates the signature of the rights holder of the rights information R2 after change on the basis of the DEA private key K_{PRI}__{DEA} managed as the secret information DS2 in DEA and adds the generated signature to the new rights object RO_{B}.

In step S273, the CPU 31 recalculates the MAC value for the constituent elements of the new rights object RO_{B} after merger on the basis of the MAC key K_{MAC} decrypted in step S271 and adds the recalculated MAC value to the rights object RO_{B}.

### (2-3) Generation of Rights Object upon Dividing User Domain (Without Change in Rights Information)

In dividing a user domain using two user domain keys into two user domains, the terminal deletes the key encryption key K_{REK} + MAC key K_{MAC}, which are encrypted by one of the two user domain keys, to validate only the other user domain key in the rights object after division.

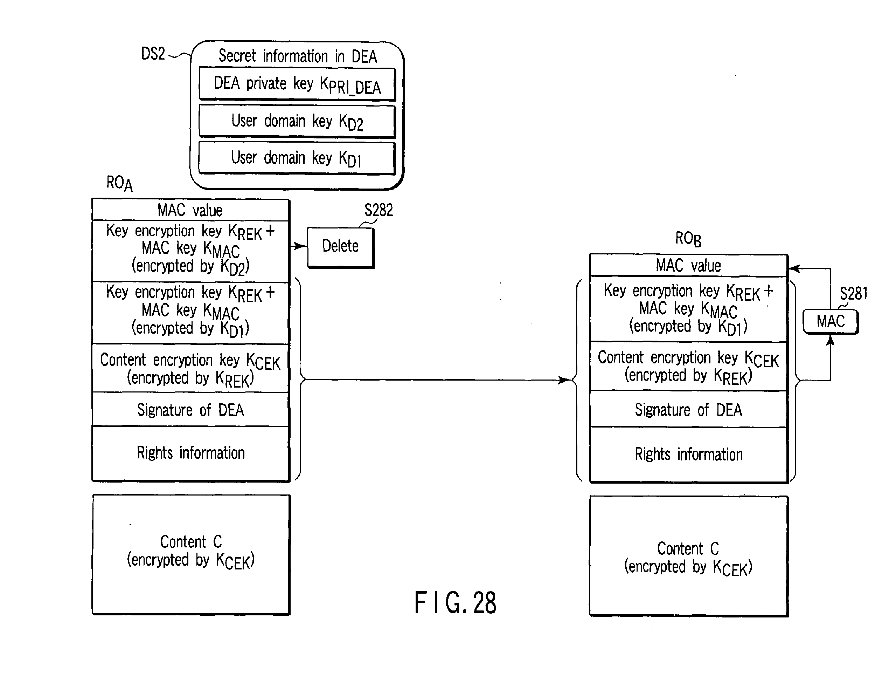

More specifically, as shown in FIG. 28, the CPU 31 of the terminal copies, of the constituent elements of the rights object RO_{A} before division, i.e., the rights information, the signature, the content encryption key K_{CEK} encrypted by the key encryption key K_{REK}, and the key encryption keys K_{REK} + MAC keys K_{MAC} encrypted by the user domain keys K_{D1} and K_{D2}, the constituent elements except the key encryption key K_{REK} + MAC key K_{MAC} encrypted by the user domain key K_{D2} to the rights object RO_{B} after division. In step S282, the key encryption key K_{REK} + MAC key K_{MAC} encrypted by the user domain key K_{D2} are deleted. In step S281, the CPU 31 recalculates the MAC value for the copied constituent elements of the rights object RO_{B} after division and adds the calculated MAC value to the rights object RO_{B} after division.

### (2-4) Generation of Rights Object upon Dividing User Domain (With Change in Rights Information)

In dividing a user domain using two user domain keys into two user domains, the terminal deletes the key encryption key K_{REK} + MAC key K_{MAC}, which are encrypted by one of the two user domain keys, to validate only the other user domain key in the rights object after division. If details of rights information change before and after division, the terminal changes the signature of the rights holder of the rights information R2 after change.

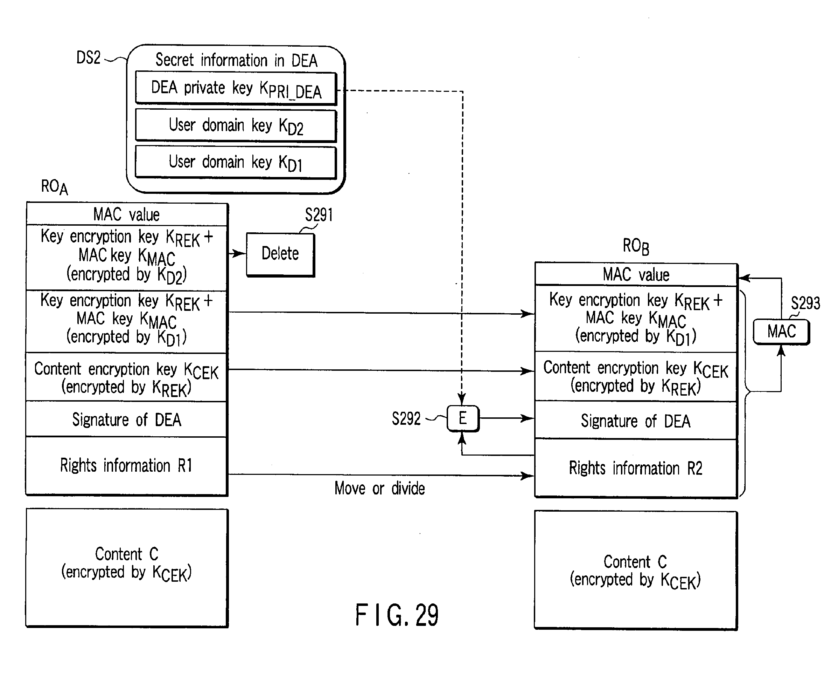

More specifically, as shown in FIG. 29, the CPU 31 of the terminal copies, of the constituent elements of the rights object RO_{A} before division, only the content encryption key K_{CEK} encrypted by the key encryption key K_{REK} and the key encryption keys K_{REK} + MAC keys K_{MAC} encrypted by the user domain key K_{D1} to the rights object RO_{B} after division. In step S291, the key encryption key K_{REK} + MAC key K_{MAC} encrypted by the user domain key K_{D2} and contained in the rights object RO_{A} before division are deleted.

The CPU 31 generates the rights information R2 by moving or dividing part of the rights information R1 in the rights object RO_{A}. In step S292, the CPU 31 generates the signature of the rights holder of the rights information R2 after change on the basis of the DEA private key K_{PRI_DEA} managed as the secret information DS2 in DEA and adds the generated signature to the new rights object RO_{B} after division. In step S293, the CPU 31 recalculates the MAC value for the constituent elements of the new rights object RO_{B} after division and adds the recalculated MAC value to the new rights object RO_{B} after division.

### (3) Movement of DEA upon User Domain Division/Merger

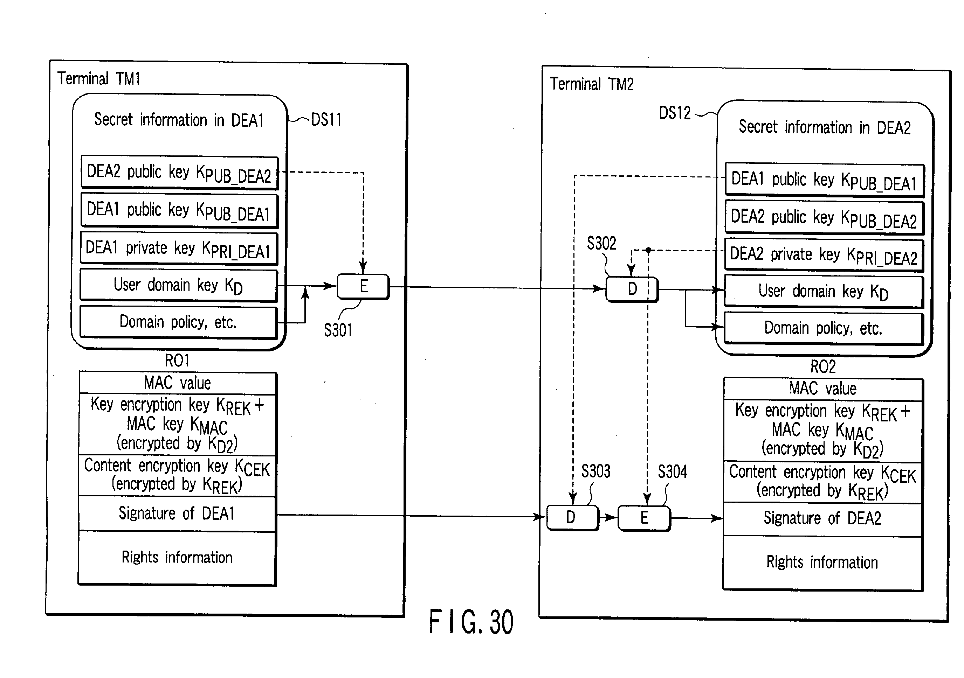

In (1) and (2), the rights object RO generation methods upon division/merger have been described. The DEA may move between terminals. In this case, the terminal executes the RO generation processing and then DEA moving processing in accordance with the following procedure. The DEA moves even at a time except user domain division/merger, e.g., when a terminal disjoins from a user domain. FIG. 30 is a view showing the procedure.

User domain management information including the user domain key and domain policy is securely moved between DEA1 before movement and DEA2 after movement, i.e., between a terminal TM1 and a terminal TM2.

For example, the terminals TM1 and TM2 exchange each other's public keys K_{PUB_DEAL} and K_{PUB_DEA2}. The terminal TM1 of the moving source confirms the validity of the DEA2 of the terminal TM2 of the moving destination. Upon confirming the validity of the DEA2, the terminal TM1 encrypts user domain management information including the user domain key and domain policy by using the public key K_{PUB_DEA2} of the DEA2 in step S301. The encrypted user domain management information of the DEA1 is transferred to the terminal TM2. The terminal TM1 of the moving source deletes the user domain key K_{D} in the DEA1.

In step S302, the terminal TM2 of the moving destination decrypts the user domain management information of the DEA1, which is encrypted and received from the terminal TM1 of the moving source, by using a private key Kp_{RI_DEA2} of the DEA2 and saves the decrypted user domain key K_{D} and domain policy as secret information in the DEA2.

The terminal TM2 executes rights object RO conversion processing upon DNA movement in the following way. In step S303, the terminal TM2 verifies the validity of the signature of a rights object R01 transferred from the terminal TM1 by decrypting it using the public key K_{PUB}__{DEAL} of the DEA1. If the validity of the signature is confirmed by the verification, the terminal TM2 generates a new signature for the DEA2 by encrypting the decrypted signature by the private key K_{PRI}__{DEA2} of the DEA2 in step S304. The signature in a rights object RO2 after movement is rewritten to the newly generated signature of the DEA2.

After rewriting the signature, the terminal TM2 calculates the MAC value of the constituent elements in the rights object RO2 and adds the MAC value to the rights object RO2 again.

As described above, in the third embodiment, the rights object RO bound by a user domain key is converted upon user domain division/merger, and the DEA is moved between the terminals TM1 and TM2, as needed. More specifically, the following processing is executed.
(1) A new user domain key for the user domain of the division/merger destination is prepared, and the key encryption key K_{REK} is re-encrypted by the new user domain key.
(2) A plurality of key encryption keys K_{REK} encrypted by different user domain keys are prepared in the rights object RO in advance for division. Upon division, one of the encrypted key encryption keys K_{REK} is added to the rights object RO of the division destination. Upon merger, the key encryption key K_{REK} is re-encrypted by user domain keys used in the merger sources. The plurality of re-encrypted key encryption keys K_{REK} are added to the rights object RO of the merger destination.
(3) If rights information in the rights object RO is to be changed by division/merger in (1) and (2), the signature of the rights holder of the rights information after change is regenerated.
(4) The MAC value is recalculated in accordance with the change in details of the new rights object RO_{B} of the division/merger destination in (1) to (3). The MAC value of the new rights object RO_{B} is replaced with the recalculated value.
(5) Upon moving the DEA in user domain division/merger, user domain management information including the user domain key K_{D} and user policy is securely transferred between the terminals TM1 and TM2. The terminal TM2 of the moving destination regenerates the signature in the rights object RO.

Hence, according to the third embodiment, even when the environment changes due to movement of a member sharing a user domain, the member can continuously share the rights of content used before movement. Even when details of rights information change upon division/merger, the holder of the rights can be made clear. In addition, it is possible to take a proper measure against DNA movement upon user domain division/merger in consideration of security.

The signature of each rights information before and after change may be omitted.

### (Fourth Embodiment)

In the third embodiment, the DEA adds a signature to rights information. In the fourth embodiment of the present invention, a rights issuer such as a rights server adds a signature to rights information. Under this condition, a terminal regenerates a rights object RO upon user domain division/merger.

An information terminal apparatus (terminal) TM according to the fourth embodiment stores an RO update program not in the RO generation program 3312 shown in FIG. 19 but in a program memory 33. The remaining components of the information terminal apparatus (terminal) TM are the same as those described in the third embodiment. The fourth embodiment will also be described with reference to FIG. 19.

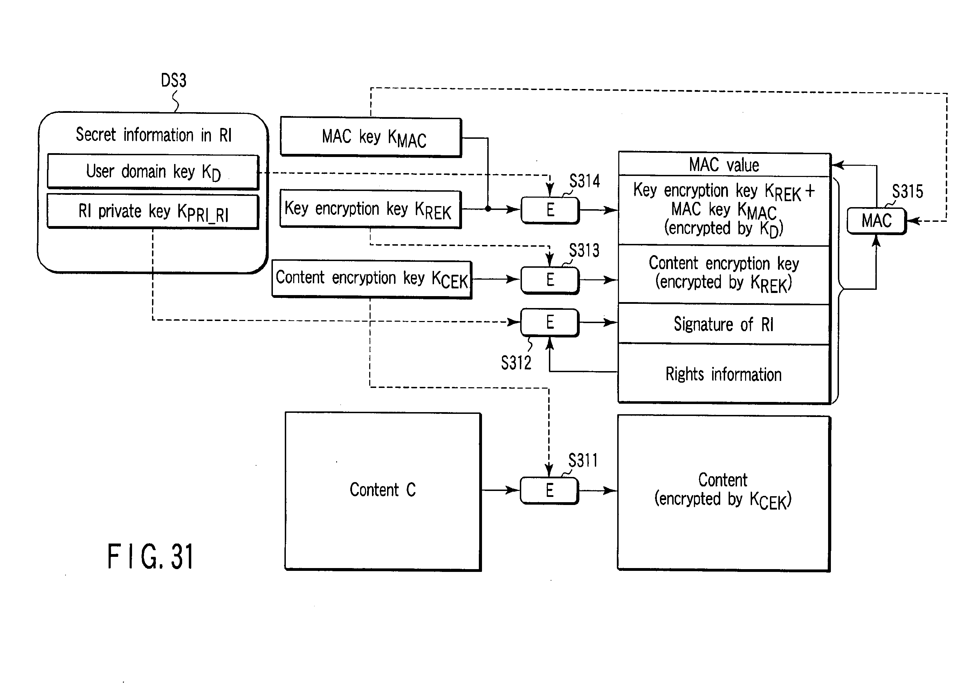

FIG. 31 is a view showing the format of the rights object RO for a user domain used in the fourth embodiment of the present invention. The rights issuer RI such as a rights server generates the rights object RO for a user domain. In step S311, content C is encrypted by a content encryption key K_{CEK}. In step S313, the content encryption key K_{CEK} is encrypted by a key encryption key K_{REK}. In step S314, the key encryption key K_{REK} is encrypted together with a MAC key K_{MAC} by a user domain key K_{D} acquired from a DEA. The content encryption key K_{CEK} and key encryption key K_{REK} are generated on the basis of random numbers. In step S312, the signature of the rights holder of rights information is generated on the basis of an RI private key K_{PRI_RI} managed as secret information DS3 in RI.

The rights object RO contains the rights information, the signature, the content encryption key K_{CEK} encrypted by the key encryption key K_{REK}, and the key encryption key K_{REK} and MAC key K_{MAC} encrypted by the user domain key K_{D}. An RO management program 3321 in a DRM agent 332 stores the rights object RO. A message authentication code (MAC) value is added to the rights object RO. The MAC value is calculated in step S315 on the basis of the elements contained in the rights object RO. The MAC value is used to verify the presence/absence of alteration of the rights object.

An operation of causing the terminal TM to divide/merge the user domains of the rights object RO for a user domain generated by the RI will be described next.

### (1) First Example of User Domain Division/Merger

In this example, a new user domain key is used to divide/merge user domains. For example, as shown in FIGS. 21A and 21B, to divide a user domain A (3A) using a user domain key key_a into user domains B (3B) and C (3C), new user domain keys key_b and key_c are used. To merge user domains D (3D) and E (3E) using user domain keys key_d and key_e, respectively, into one user domain F (3F), a new user domain key key_f is used.

### (1-1) Regeneration (Change) of Rights Object RO (Without Change in Rights Information)

The program memory 33 of the terminal TM stores, as secret information DS4 in DEA, a new user domain key K_{D2} to be used for user domain division/merger in addition to an active user domain key K_{D1}. The program memory 33 also stores a DEA private key K_{PRI_DEA}.

To regenerate a new rights object RO_{B} based on a rights object RO_{A} without changing details of rights information upon user domain division/merger, the terminal changes only the key encryption key K_{REK} + MAC key K_{MAC} and the MAC value of the elements contained in the rights object RO_{A}.

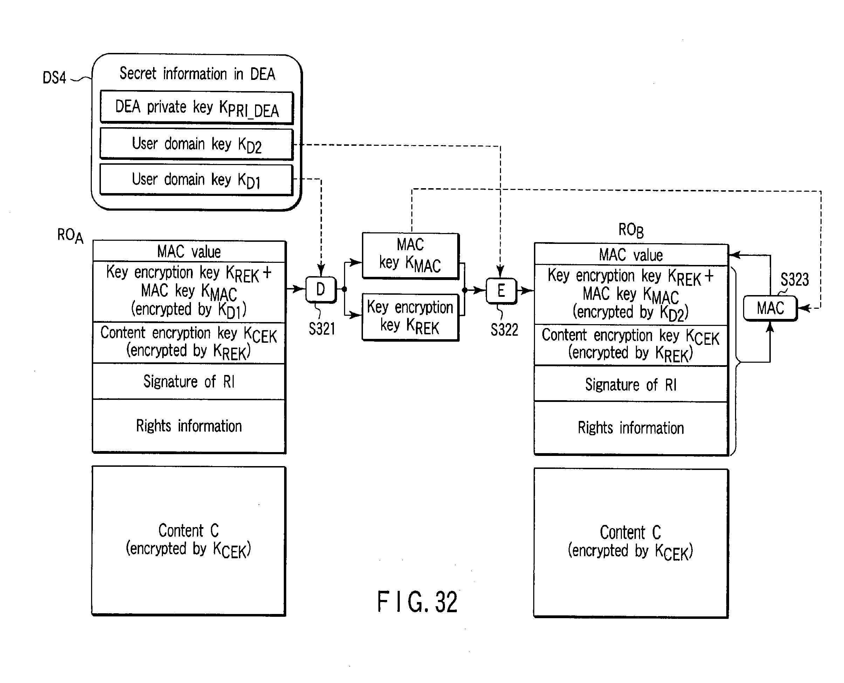

As shown in FIG. 32, a CPU 31 of the terminal temporarily decrypts the encrypted key encryption key K_{REK} + MAC key K_{MAC} in the rights object RO_{A} by using the active user domain key K_{D1} in step S321. In step S322, the decrypted key encryption key K_{REK} + MAC key K_{MAC} are re-encrypted on the basis of the new user domain key K_{D2} and added to the new rights object RO_{B} as a constituent element. In step S323, the CPU 31 recalculates the MAC value of the new rights object RO_{B} on the basis of the decrypted MAC key K_{MAC} and adds the recalculated MAC value to the new rights object RO_{B}.

### (1-2) Regeneration (Change) of Rights Object RO (With Change in Rights Information)

To regenerate a new rights object RO_{B} based on a rights object RO_{A} upon user domain division/merger, the terminal changes the key encryption key K_{REK} + MAC key K_{MAC} and the MAC value of the elements contained in the rights object RO_{A}.

If details of rights information R2 after division/merger change from those of rights information R1 before merger, the terminal adds rights consumption information representing the rights information after change to the new rights object RO_{B}. The terminal also generates the signature of the DEA for the rights consumption information and adds the signature to the rights object RO_{B}.

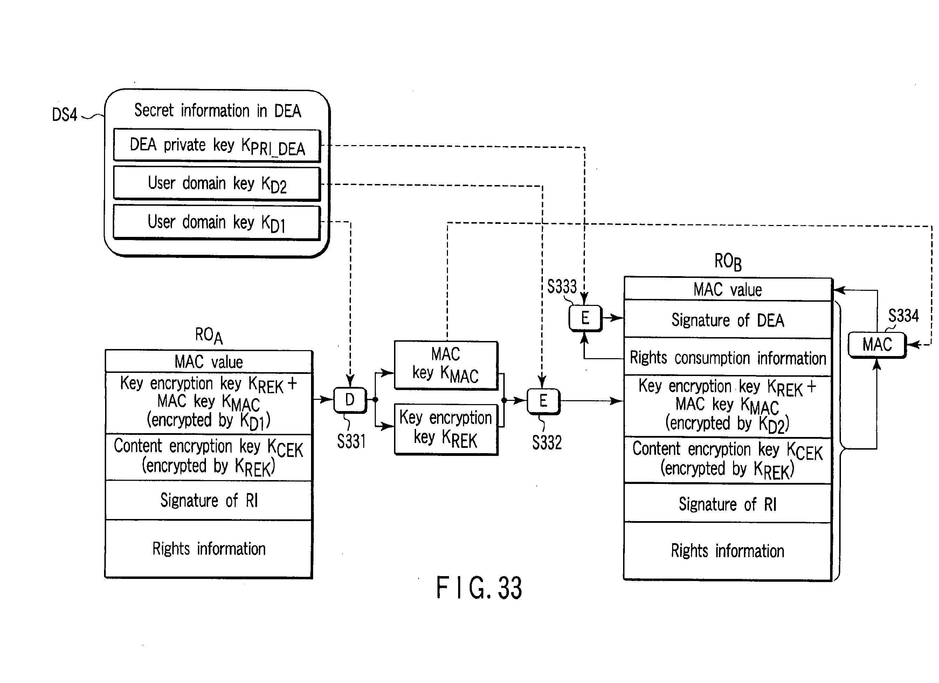

As shown in FIG. 33, the CPU 31 of the terminal decrypts the encrypted key encryption key K_{REK} + MAC key K_{MAC} in the rights object RO_{A} by using the active user domain key K_{D1} in step S331. In step S332, the decrypted key encryption key K_{REK} + MAC key K_{MAC} are re-encrypted on the basis of the new user domain key K_{D2} and added to the new rights object RO_{B} as a constituent element.

In changing the details of the rights information of the new rights object RO_{B} from the rights information in the rights object RO_{A}, the CPU 31 generates rights consumption information separately from the existing rights information and adds the generated rights consumption information to the new rights object RO_{B}. In step S333, the CPU 31 generates a signature for the rights consumption information on the basis of the DEA private key K_{PRI_DEA} in the secret information DS4 in DEA and adds the newly generated signature to the rights consumption information in the new rights object RO_{B}.

In step S334, the CPU 31 recalculates the MAC value for the constituent elements of the new rights object RO_{B} on the basis of the decrypted MAC key K_{MAC} and adds the recalculated MAC value to the new rights object RO_{B}.

### (2) Second Example of User Domain Division/Merger

In this example, upon dividing a user domain, a plurality of user domain keys prepared in advance are assigned to divided user domains. Upon merging user domains, user domain keys used in the plurality of user domains before merger are assigned to the merged user domain.

For example, as shown in FIGS. 24A and 24B, to divide a user domain A (6A) using two user domain keys key_b and key_c into user domains B (6B) and C (6C), the user domain keys key_b and key_c are assigned to the divided user domains B and C, respectively. To merge user domains D (6D) and E (6E) using user domain keys key_d and key_e into one user domain F (6F), the user domain keys key_d and key_e used in the user domains D and E before merger are assigned to the merged user domain F (6F).

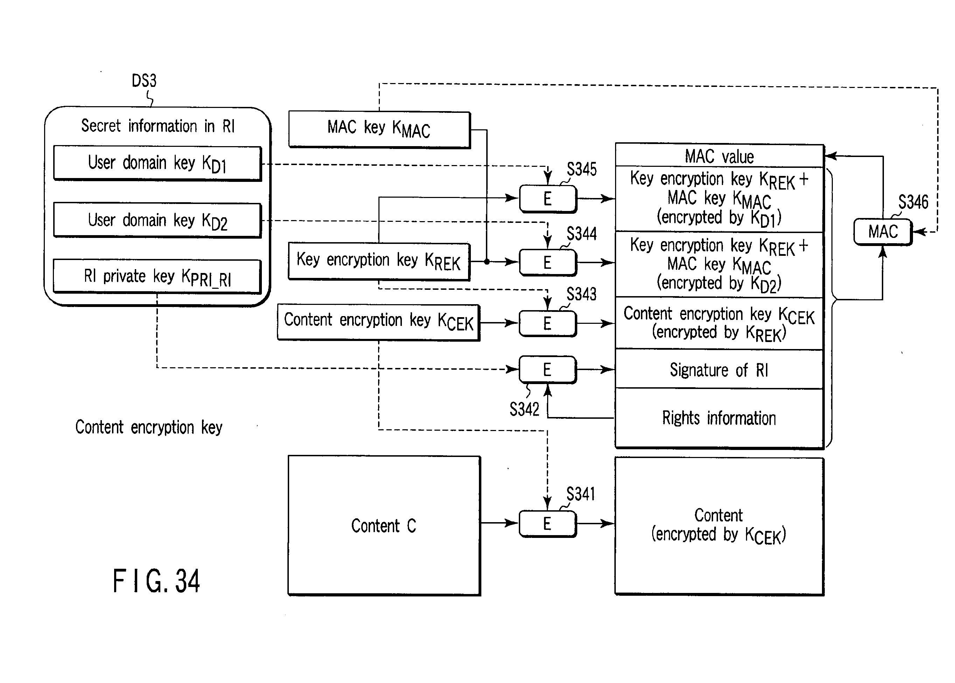

The rights object RO valid for a plurality of user domains is generated by the rights server RI and has an encryption format having, e.g., the following structure. FIG. 34 is a view showing the structure.

In step S341, the content C is encrypted by the content encryption key K_{CEK}- In step S343, the content encryption key K_{CEK} is encrypted by the key encryption key K_{REK}. In steps S344 and S345, the key encryption key K_{REK} is encrypted together with the MAC key K_{MAC} by the two different user domain keys K_{D1} and K_{D2} acquired from the DEA. The content encryption key K_{CEK} and key encryption key K_{REK} are generated on the basis of random numbers. In step S342, the signature of the rights holder of rights information is generated on the basis of the RI private key Kp_{RI}__{RI} managed as the secret information DS3 in RI.

The rights object RO contains the rights information, the signature, the content encryption key K_{CEK} encrypted by the key encryption key K_{REK}, and the key encryption keys K_{REK} and MAC keys K_{MAC} encrypted by the user domain keys K_{D1} and K_{D2}. The RO management program 3321 stores the rights object RO. A message authentication code (MAC) value is added to the rights object RO. The MAC value is calculated in step S346 on the basis of the elements contained in the rights object RO. The MAC value is used to verify the presence/absence of alteration of the rights object.

### (2-1) Regeneration (Change) of Rights Object Upon Merging User Domains (Without Change in Rights Information)

The program memory 33 of the terminal TM stores, as secret information DS2 in DEA, the user domain key K_{D2} for user domain merger in addition to the active user domain key K_{D1}.

In merging two user domains into one user domain, the terminal TM re-encrypts the key encryption key K_{REK} + MAC key K_{MAC} of the rights object RO_{A}, which are encrypted by the user domain key K_{D1}, by using the user domain key K_{D2} and adds the re-encrypted key encryption key K_{REK} + MAC key K_{MAC} to the new rights object RO_{B} after merger so as to validate both the user domain keys used in the user domains before merger.

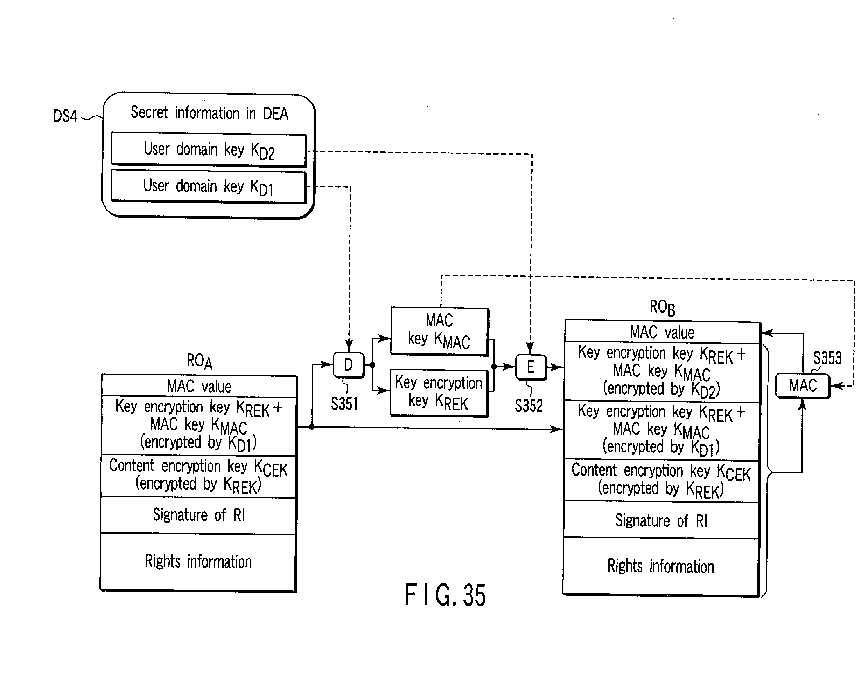

More specifically, as shown in FIG. 35, the CPU 31 copies the key encryption key K_{REK} + MAC key K_{MAC} encrypted by the user domain key K_{D1} and contained in the rights object RO_{A} to the new rights object RO_{B} after merger. Simultaneously in step S351, the key encryption key K_{REK} + MAC key K_{MAC} encrypted by the user domain key K_{D1} are decrypted by using the user domain key K_{D1} of the secret information DS4 in DEA. In step S352, the CPU 31 re-encrypts the decrypted key encryption key K_{REK} + MAC key K_{MAC} by using the user domain key K_{D2} of the secret information DS4 in DEA and adds the key encryption key K_{REK} + MAC key K_{MAC} re-encrypted by the user domain key K_{D2} to the new rights object RO_{B} after merger. In step S353, the CPU 31 recalculates the MAC value for the constituent elements of the new rights object RO_{B} after merger on the basis of the MAC key K_{MAC} decrypted in step S351 and adds the recalculated MAC value to the rights object RO_{B}.

### (2-2) Regeneration (Change) of Rights Object Upon Merging User Domains (With Change in Rights Information)

In merging two user domains into one user domain, the terminal TM copies, to the rights object RO_{B}, the key encryption key K_{REK} + MAC key K_{MAC} of the rights object RO_{A}, which are encrypted by the user domain key K_{D1}, re-encrypts the key encryption key K_{REK} + MAC key K_{MAC} by using the user domain key K_{D2}, adds the re-encrypted key encryption key K_{REK} + MAC key K_{MAC} to the new rights object RO_{B} after merger so as to validate both the user domain keys used in the user domains before merger. If details of rights information change before and after merger, the terminal generates rights consumption information separately from the existing rights information and its signature and adds them to the rights information R2 after change.

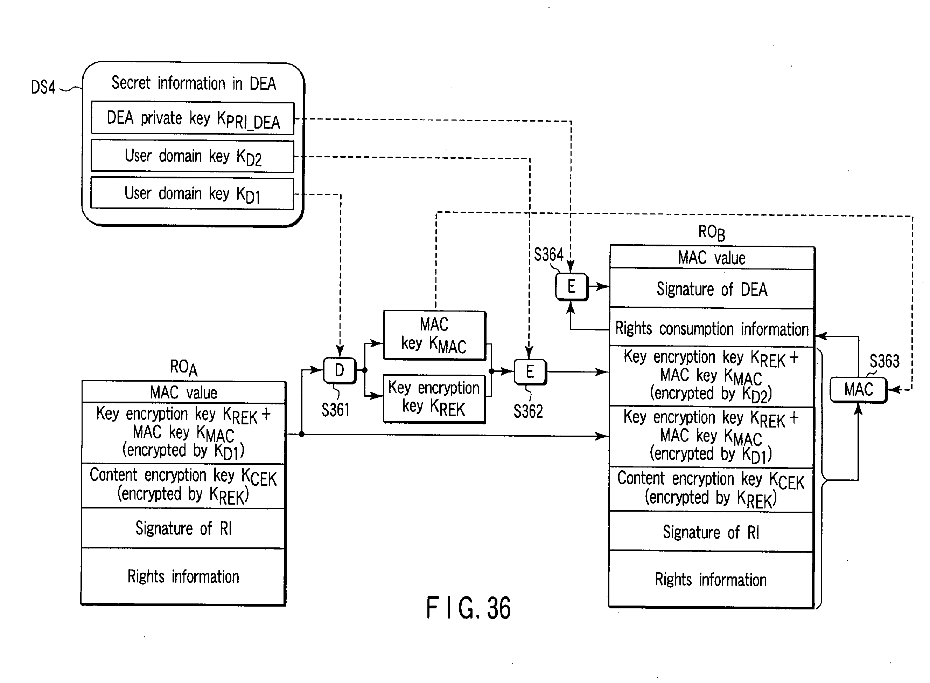

More specifically, as shown in FIG. 36, the CPU 31 of the terminal copies the key encryption key K_{REK} + MAC key K_{MAC} encrypted by the user domain key K_{D1} and contained in the rights object RO_{A} to the new rights object RO_{B} after merger. Simultaneously in step S361, the key encryption key K_{REK} + MAC key K_{MAC} encrypted by the user domain key K_{D1} are decrypted by using the user domain key K_{D1} of the secret information DS4 in DEA. In step S362, the CPU 31 re-encrypts the decrypted key encryption key K_{REK} + MAC key K_{MAC} by using the user domain key K_{D2} of the secret information DS4 in DEA and adds the key encryption key K_{REK} + MAC key K_{MAC} re-encrypted by the user domain key K_{D2} to the new rights object RO_{B} after merger.

The CPU 31 generates rights consumption information separately from the rights information in the rights object RO and adds the generated rights consumption information to the new rights object RO_{B} after merger. In step S364, the CPU 31 also generates the signature of the DEA for the rights consumption information on the basis of the DEA private key K_{PRI_DEA} managed as the secret information DS4 in DEA and adds the generated signature to the rights consumption information in the new rights object RO_{B}.

In step S363, the CPU 31 recalculates the MAC value for the constituent elements of the new rights object RO_{B} after merger on the basis of the MAC key K_{MAC} decrypted in step S361 and replaces the MAC value of the rights object RO_{B} after merger with the recalculated MAC value.

### (2-3) Regeneration (Change) of Rights Object upon Dividing User Domain (Without Change in Rights Information)

In dividing a user domain using two user domain keys into two user domains, the terminal deletes the key encryption key K_{REK} + MAC key K_{MAC}, which are encrypted by one of the two user domain keys, to validate only the other user domain key in the rights object after division.

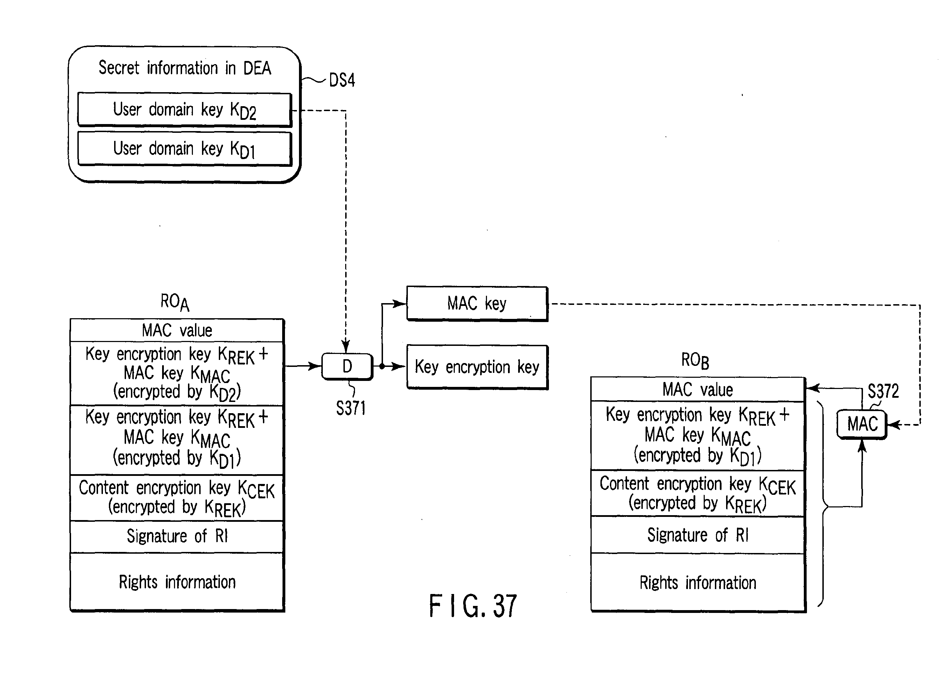

More specifically, as shown in FIG. 37, the CPU 31 of the terminal copies, of the constituent elements of the rights object RO_{A} before division, i.e., the rights information, the signature, the content encryption key K_{CEK} encrypted by the key encryption key K_{REK}, and the key encryption keys K_{REK} + MAC keys K_{MAC} encrypted by the user domain keys K_{D1} and K_{D2}, the constituent elements except the key encryption key K_{REK} + MAC key K_{MAC} encrypted by the user domain key K_{D2} to the rights object RO_{B} after division.

In step S371, the CPU 31 decrypts the key encryption key K_{REK} + MAC key K_{MAC}, which are encrypted by the user domain key K_{D2}, in the rights object RO_{A} by using the user domain key K_{D2} of the secret information DS4 in DEA. In step S372, the CPU 31 recalculates the MAC value for the constituent elements of the rights object RO_{B} after division and adds the recalculated MAC value to the rights object RO_{B} after division.

### (2-4) Regeneration (Change) of Rights Object Upon Dividing User Domain (With Change in Rights Information)

In dividing a user domain using two user domain keys into two user domains, the terminal deletes the key encryption key K_{REK} + MAC key K_{MAC}, which are encrypted by one of the two user domain keys, to validate only the other user domain key in the rights object after division. If details of rights information change before and after division, the terminal newly generates rights consumption information and its signature and adds them to the rights object RO_{B} after division.

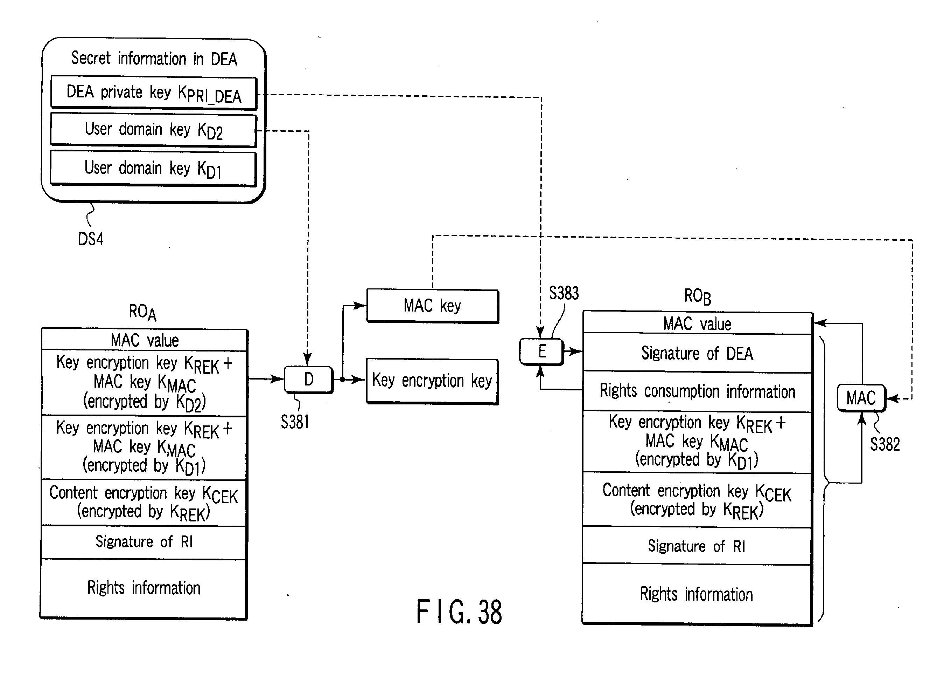

More specifically, as shown in FIG. 38, the CPU 31 of the terminal copies, of the constituent elements of the rights object RO_{A} before division, the rights information and its signature, the content encryption key K_{CEK} encrypted by the key encryption key K_{REK}, and the key encryption keys K_{REK} + MAC keys K_{MAC} encrypted by the user domain key K_{D1} to the rights object RO_{B} after division.

The CPU 31 newly generates rights consumption information and adds it to the rights object RO_{B} after division. In step S383, the CPU 31 generates the signature of the DEA for the rights consumption information on the basis of the DEA private key K_{PRI_DEA} managed as the secret information DS4 in DEA and adds the generated signature to the rights consumption information in the new rights object RO_{B} of the division destination.

In step S381, the CPU 31 decrypts, on the basis of the user domain key K_{D2} of the secret information DS4 in DEA, the key encryption key K_{REK} + MAC key K_{MAC} encrypted by the user domain key K_{D1} in the rights object RO before division. In step S382, the CPU 31 recalculates the MAC value for the constituent elements of the rights object RO_{B} after division on the basis of the decrypted MAC key K_{MAC} and replaces the MAC value of the rights object RO_{B} after division with the recalculated MAC value.

In (2-3) and (2-4), the key encryption key K_{REK} + MAC key K_{MAC} encrypted by the user domain key K_{D1} are copied to the rights object RO_{B} after division. Instead, the key encryption key K_{REK} + MAC key K_{MAC} encrypted by the user domain key K_{D2} may be copied to the rights object RO_{B} after division. The signatures of rights information and rights consumption information may be omitted.

### (3) Movement of DEA upon User Domain Division/Merger

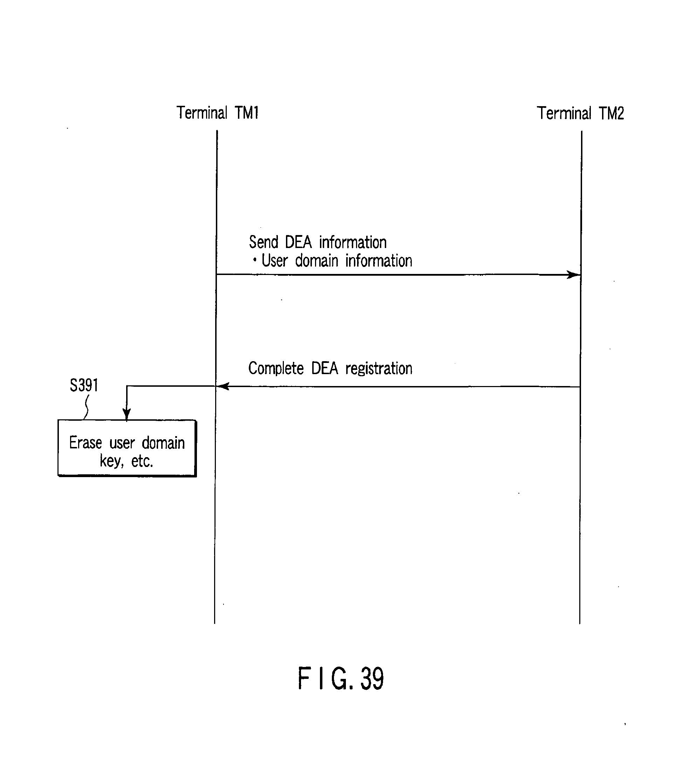

To move the DEA directly between terminals upon user domain division/merger, the RO generation processing is executed, and then DEA moving processing is executed in accordance with the following procedure. The DEA moves even at a time except user domain division/merger, e.g., when a terminal disjoins from a user domain. FIG. 39 is a sequence chart showing the procedure.

User domain management information including the user domain key and domain policy is securely moved between DEA1 before movement and DEA2 after movement, i.e., between a terminal TM1 and a terminal TM2. If secure transfer of the user domain management information is successful, the terminal TM2 of the moving destination returns a DEA registration completion notification to the terminal TM1 of the moving source. Upon receiving the DEA registration completion notification, the terminal TM1 of the moving source erases the user domain management information including the user domain key and domain policy from a DEA 331 in step S391. The user domain management information may be erased upon completing transmission of the user domain management information before receiving the DEA registration completion notification. (3-1) First Example of DEA Moving Processing Between Terminals

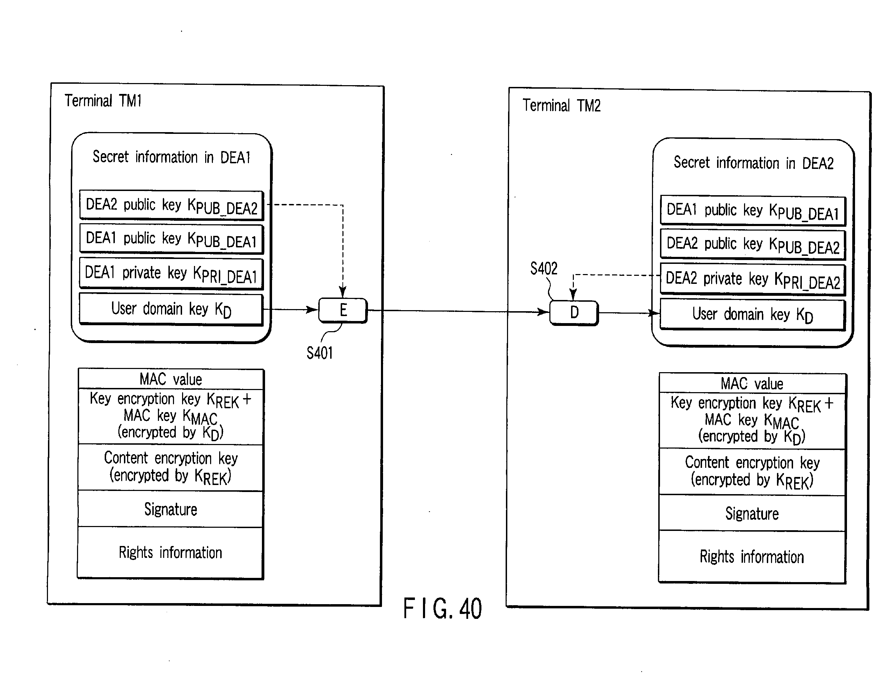

To securely transfer user domain management information between the terminals TM1 and TM2, they exchange each other's public keys K_{PUB_DEA1} and K_{PUB_DEA2}, as shown in FIG. 40. The terminal TM1 of the moving source confirms the validity of the DEA2 of the terminal TM2 of the moving destination. Upon confirming the validity, the terminal TM1 encrypts user domain management information by using the public key K_{PUB_DEA2} of the DEA2 and transfers it to the terminal TM2 in step S401.

In step S402, the terminal TM2 of the moving destination decrypts the user domain management information of the DEA1, which is encrypted and received from the terminal TM1 of the moving source, by using a private key K_{PRI_DEA2} of the DEA2. The terminal TM2 saves the decrypted user domain management information in the DEA 331 as secret information in the DEA2.

### (3-2) Second Example of DEA Moving Processing Between Terminals

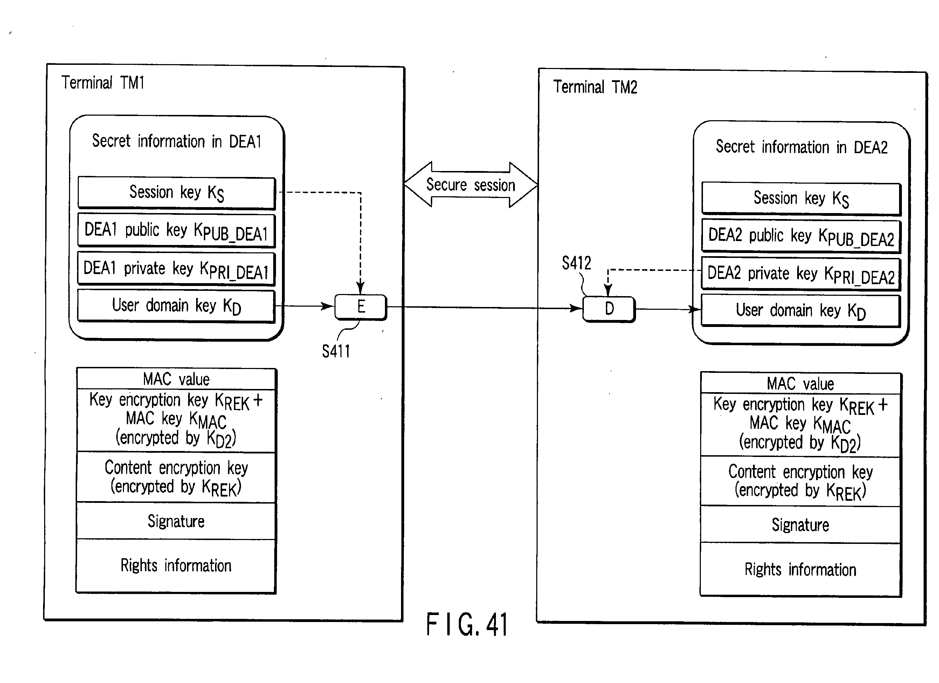

In this example, the terminals TM1 and TM2 establish a secure session between them in advance to transfer user domain management information via the secure session. FIG. 41 is a view showing the processing procedure.

The terminals TM1 and TM2 establish a secure session between them and share the session key. In step S411, the terminal TM1 encrypts user domain management information including the user domain key K_{D} and user policy by using the session key and transfers the encrypted user domain management information to the terminal TM2. In step S412, the terminal TM2 decrypts, on the basis of the session key, the user domain management information encrypted and transferred from the terminal TM1. The terminal TM2 saves the decrypted user domain key K_{D} and user policy in the DEA 331 as secret information in the DEA2.

### (4) DEA Movement via Rights server

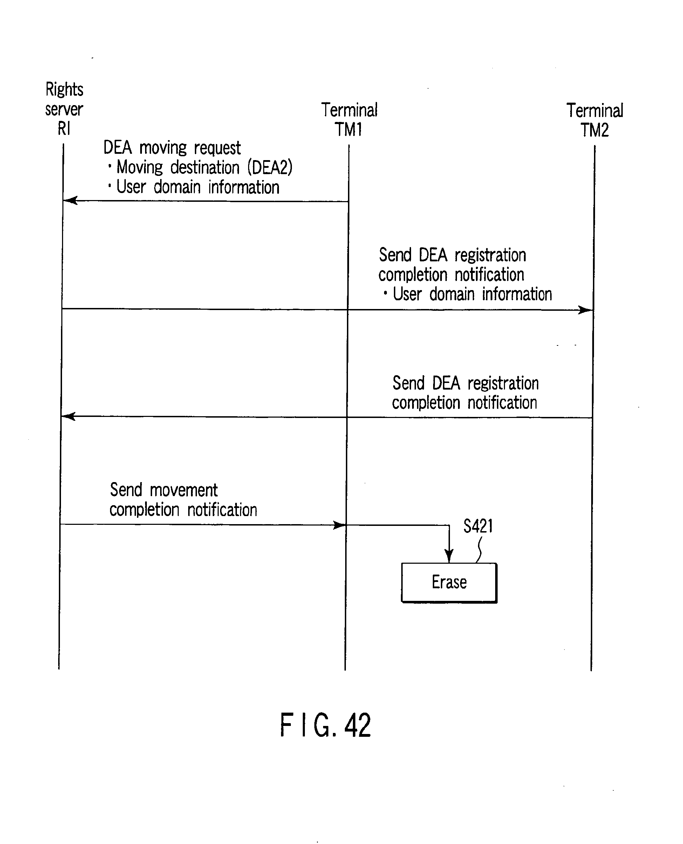

In this example, user domain management information transfer between the terminals TM1 and TM2 is done via the rights server serving as a rights issuer RI. FIG. 42 is a sequence chart showing the transfer procedure.

Information representing the terminal TM2 of the moving destination and user domain management information including the user domain key K_{D} and user policy are securely transmitted from the terminal TM1 of the transfer source to the rights server RI via a communication network (not shown). On the basis of the information representing the terminal TM2 of the moving destination, which is received from the terminal TM1, the rights server RI transmits the user domain management information sent from the terminal TM1 to the terminal TM2 of the moving destination via the communication network.

Upon receiving the user domain management information from the rights server RI, the terminal TM2 of the moving destination saves the information in its DEA 331 and determines whether the user domain management information is successfully received. If reception is successful, the terminal TM2 returns a DEA registration completion notification to the rights server RI. If reception fails, the terminal TM2 returns a registration failure notification to the rights server RI.

Upon receiving the DEA registration completion notification from the terminal TM2 of the moving destination, the rights server RI transmits a movement completion notification to the terminal TM1 of the moving source. Upon receiving the movement completion notification from the rights server RI, the terminal TM1 determines that the moving processing is completed and erases the user domain management information in step S421. If the rights server RI that has received the registration failure notification transmits a movement failure notification, the terminal TM1 displays "movement failure" for the user and continuously holds the user domain management information without erasing.

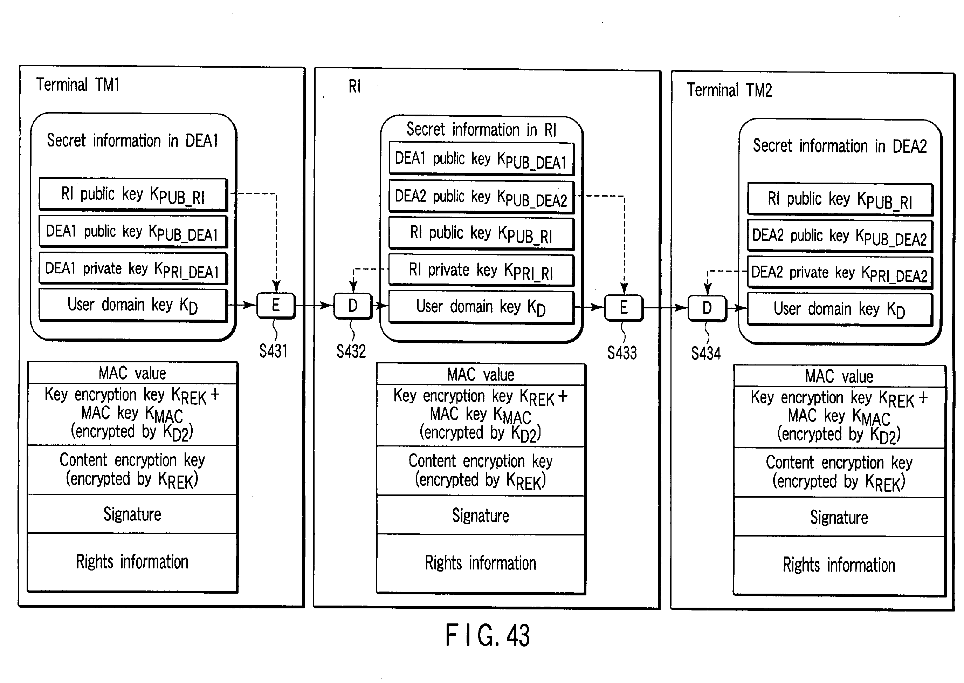

FIG. 43 is a view showing details of user domain management information transfer processing via the rights server RI.

The terminal TM1 and rights server RI exchange the public keys K_{PUB_DEA1} and K_{PUB_RI} to confirm each other's validity. After confirming the validity, the terminal TM1 encrypts the user domain management information including the user domain key K_{D} and domain policy by using the public key K_{PUB_RI} of the rights server RI and transfers the user domain management information to the rights server RI in step S431. In step S432, the rights server RI decrypts the user domain management information of the DEA1, which is encrypted and received from the terminal TM1 of the moving source, by using the private key K_{PRI_RI} of the rights server RI.

The rights server RI and terminal TM2 exchange the public keys K_{PUB}__{RI} and K_{PUB_DEA2} to confirm each other's validity. After confirming the validity, the rights server RI encrypts, by the public key K_{PUB_DEA2} of the terminal TM2, the user domain management information sent from the terminal TM1 and decrypted and transfers the user domain management information to the terminal TM2 in step S433. In step S434, the terminal TM2 decrypts, by using its public key K_{PUB_DEA2}, the user domain management information which is encrypted and sent from the rights server RI. The terminal TM2 saves the decrypted user domain management information in the DEA 331 as secret information in the DEA2.

As described above, the fourth embodiment assumes that the rights issuer RI such as a rights server adds a signature to rights information. Under this condition, the terminal TM regenerates (changes) the rights object RO upon user domain division/merger. The DEA is moved between the terminals TM1 and TM2 directly or via the rights server RI, as needed. More specifically, the following processing is executed as in the third embodiment.
(1) A new user domain key for the user domain of the division/merger destination is prepared, and the key encryption key K_{REK} is re-encrypted by the new user domain key.
(2) A plurality of key encryption keys K_{REK} encrypted by different user domain keys are prepared in the rights object RO in advance for division. Upon division, one of the encrypted key encryption keys K_{REK} is added to the rights object RO of the division destination. Upon merger, the key encryption key K_{REK} is re-encrypted by user domain keys used in the merger sources. The re-encrypted key encryption keys K_{REK} are added to the rights object RO of the merger destination.
(3) If rights information in the rights object RO is to be changed in (1) and (2), rights consumption information and its signature are newly generated and added to the rights object RO_{B} of the division/merger destination.
(4) The MAC value is recalculated in accordance with the constituent elements of the rights object RO_{B} newly generated for division/merger destination in (1) to (3). The MAC value of the new rights object RO_{B} is replaced with the recalculated value.
(5) Upon moving the DEA in user domain division/merger, user domain management information including the user domain key K_{D} and user policy is securely transferred between the terminals TM1 and TM2 directly or via the rights server RI.

Hence, according to the fourth embodiment, even when the environment changes due to movement of a member sharing a user domain, the member can continuously share the rights of content used before movement. Even when details of rights information change upon division/merger, it is unnecessary to change the existing rights information and its signature because rights consumption information and its signature are generated in addition to the existing rights information. In addition, it is possible to take a proper measure against DNA movement upon user domain division/merger in consideration of security. When DEA transfer is done via the rights server RI, DEA movement can more strictly be managed.

The signature of each rights information and rights consumption information before and after change may be omitted.

### (Other Embodiments)

In the first and second embodiments, when rights information is changed, or rights consumption information is added, its signature is also rewritten. However, the signature of the rights information need not always be added. In the above-described embodiments, a MAC value is added to the rights object. However, the MAC value need not always be added. As the copyrighted content acquisition method, copyrighted content is downloaded from a content server or rights server or read from a recording medium.

In the first and second embodiments, rights consumption information representing a rights consumption state is added to the rights object. Instead of rights consumption information, information representing the rights usable range may be added.

The rights object RO conversion procedure and details of the processing in the terminal TA or rights server RI upon movement (assignment) of copyrighted content, the type and arrangement of the information terminal apparatus, and the type of the copyrighted content and details of its rights can variously be changed or modified without departing from the spirit and scope of the present invention.

In the third and fourth embodiments, one user domain is divided into two user domains, or two user domains are merged into one user domain. However, the present invention is also applicable to division/merger of three or more user domains. In the above-described embodiments, a MAC value is added to the rights object. However, the MAC value need not always be added. As the copyrighted content acquisition method, copyrighted content is downloaded from a content server or rights server or read from a recording medium.

The rights object RO generation procedure and details of the processing upon user domain division/merger, the moving procedure and details of the processing upon DEA movement, the type and arrangement of the information terminal apparatus, and the type of the copyrighted content and details of its rights can variously be changed or modified without departing from the spirit and scope of the present invention.

That is, the present invention is not limited to the above-described embodiments and can be practiced by modifying the constituent elements without departing from its spirit and scope. Various inventions can be formed by appropriately combining the plurality of constituent elements disclosed in the above-described embodiments. For example, some of the constituent elements disclosed in the embodiments may be removed. Alternatively, the constituent elements of different embodiments may appropriately be combined.

## Claims

1. A copyrighted content moving method of transferring encrypted content and a first rights object (RO_{A}) from a first terminal (TA) to a second terminal (TB) of a moving destination, the first rights object (RO_{A}) containing first rights information of the encrypted content (EC) and encryption key information (K_{REK}) encrypted on the basis on a public key (Kp_{RI A}) of the first terminal (TA), **characterized by** comprising steps of:
causing the first terminal (TA) to acquire a public key (K_{PRI_B}) of the second terminal (TB) from the second terminal (TB);
causing the first terminal (TA) to re-encrypt, on the basis of the acquired public key (K_{PRI_B}) of the second terminal (TB), the encryption key information (K_{REK}) encrypted by the public key (K_{PRI A}) of the first terminal (TA) and contained in the rights object (RO_{A}) as a moving target; and
transmitting the encrypted content (EC) and a second rights object (RO_{B}) containing the re-encrypted encryption key information from the first terminal (TA) to the second terminal (TB).

2. The method according to claim 1, **characterized by** further comprising a step of causing the first terminal (TA) to rewrite rights information contained in the first rights object (RO_{A}) from the first rights information (R1) to second rights information (R2) or add third rights information representing one of a rights consumption state and a rights usable range.

3. The method according to claim 1, **characterized by** further comprising a step of, if a message authentication code (MAC) value calculated on the basis of constituent elements of the first rights object is added to the first rights object (RO_{A}), recalculating, on the basis of constituent elements of the second rights object (RO_{B}), a MAC value to be added to the generated second rights object (RO_{B}).

4. A copyrighted content moving method of transferring encrypted content and a first rights object (RO_{A}) from a first terminal (TA) to a second terminal (TB) of a moving destination via a rights server (RI), the first rights object (RO_{A}) containing first rights information of the encrypted content (EC) and encryption key information (K_{REK}) encrypted on the basis on a public key (K_{PRI_A}) of the first terminal (TA), **characterized by** comprising steps of:
causing the first terminal (TA) to acquire a public key (Kp_{RI RI}) of the rights server (RI) from the rights server (RI);
causing the first terminal (TA) to re-encrypt, on the basis of the acquired public key (K_{PRI RI}) of the rights server (RI), the encryption key information (K_{REK}) encrypted by the public key (Kp_{RI A}) of the first terminal (TA) and contained in the rights object as a moving target;
transmitting a second rights object (RO_{B}) containing the encryption key information re-encrypted on the basis of the public key (Kp_{RI RI_}) of the rights server (RI) from the first terminal (TA) to the rights server (RI);
causing the rights server (RI) to acquire a public key (Kp_{RI B}) of the second terminal (TB) of the moving destination from the second terminal (TB);
causing the rights server (RI) to re-encrypt, on the basis of the acquired public key (K_{PRI B}) of the second terminal (TB), the encryption key information (K_{REK}) encrypted by the public key (Kp_{RI RI}) of the rights server (RI) and contained in the second rights object (RO_{B}) sent from the first terminal (TA);
transmitting a third rights object containing the encryption key information (K_{REK}) re-encrypted on the basis of the public key (K_{PRI B}) of the second terminal (TB) from the rights server (RI) to the second terminal (TB); and
transmitting the encrypted content from the first terminal (TA) to the second terminal (TB).

5. The method according to claim 4, **characterized in that** the step of causing the rights server (RI) to re-encrypt, on the basis of the acquired public key (K_{PRI B}) of the second terminal (TB), the encryption key information (K_{REK}) encrypted by the public key (K_{PRI RI}) of the rights server (RI) and contained in the second rights object (RO_{A}) sent from the first terminal (TA) comprises steps of:
if identification information of the rights object is added to the second rights object (RO_{B}) sent from the first terminal (TA), extracting the identification information from the second rights object (RO_{B});
accessing a rights object management table (26) on the basis of the extracted identification information and reading corresponding key encryption key information (K_{REK});
encrypting the key encryption key information (K_{REK}) from the management table (26) on the basis of the public key (Kp_{RI B}) of the second terminal (TB), which is saved in the rights server (RI) as secret information; and
rewriting the key encryption key information (K_{REK}) in the second rights object (RO_{B}) to the key encryption key information (K_{REK}) encrypted on the basis of the public key (K_{PRI B}) of the second terminal (TB).

6. The method according to claim 4, **characterized by** further comprising a step of causing the first terminal (TA) to rewrite rights information contained in the first rights object (RO_{A}) from the first rights information to second rights information or add third rights information representing one of a rights consumption state and a rights usable range.

7. The method according to claim 4, **characterized by** further comprising a step of, if a message authentication code (MAC) value calculated on the basis of constituent elements of the first rights object (RO_{A}) is added to the first rights object (RO_{A}), recalculating, on the basis of constituent elements of the second rights object (RO_{B}), a MAC value to be added to the generated second rights object (RO_{B}).

8. A copyrighted content moving method of transferring encrypted content (EC) and a first rights object (RO_{A}) from a first terminal (TA) to a second terminal (TB) of a moving destination via a rights server (RI), the first rights object (RO_{A}) containing first rights information of the encrypted content (EC), signature information, and encryption key information (K_{REK}) encrypted on the basis on a public key (K_{PRI A}) of the first terminal (TA), **characterized by** comprising steps of:
causing the first terminal (TA) to acquire a public key (K_{PRI B}) of the second terminal (TB) from the second terminal (TB);
causing the first terminal (TA) to re-encrypt, on the basis of the acquired public key (K_{PRI B}) of the second terminal (TB), the encryption key information (K_{REK}) encrypted by the public key (K_{PRI A}) of the first terminal (TA) and contained in the rights object as a moving target;
transmitting a second rights object (RO_{B}) containing the encryption key information (K_{REK}) re-encrypted on the basis of the public key (Kp_{RI B}) of the second terminal (TB) from the first terminal (TA) to the rights server (RI);
causing the rights server (RI) to change, on the basis of a private key (Kp_{RI RI}) of the rights server (RI), the signature information contained in the second rights object (RO_{B}) sent from the first terminal (TA);
transmitting a third rights object containing the changed signature information from the rights server (RI) to the second terminal (TB); and
transmitting the encrypted content from the first terminal (TA) to the second terminal (TB).

9. The method according to claim 8, **characterized by** further comprising a step of causing the first terminal (TA) to rewrite rights information contained in the first rights object (RO_{A}) from the first rights information to second rights information or add third rights information representing one of a rights consumption state and a rights usable range.

10. The method according to claim 8, **characterized by** further comprising a step of, if a message authentication code (MAC) value calculated on the basis of constituent elements of the first rights object (RO_{A}) is added to the first rights object (RO_{A}), recalculating, on the basis of constituent elements of the second rights object (RO_{B}), a MAC value to be added to the generated second rights object (RO_{B}).

11. A copyrighted content moving method of transferring encrypted content and a first rights object (RO_{A}) from a first terminal (TA) to a second terminal (TB) of a moving destination via a rights server (RI), the first rights object (RO_{A}) containing first rights information of the encrypted content (EC), signature information, and encryption key information (K_{REK}) encrypted on the basis on a public key (K_{PRI A}) of the first terminal (TA), **characterized by** comprising steps of:
causing the first terminal (TA) to acquire a public key (K_{PRI B}) of the second terminal (TB) from the second terminal (TA);
causing the first terminal (TA) to re-encrypt, on the basis of the acquired public key (K_{PRI B}) of the second terminal (TB), the encryption key information (K_{REK}) encrypted by the public key (Kp_{RI A}) of the first terminal (TA) and contained in the rights object as a moving target;
transmitting the encrypted content (EC) and a second rights object (RO_{B}) containing the encryption key information (K_{REK}) re-encrypted on the basis of the public key (K_{PRI_B}) of the second terminal (TB) from the first terminal (TA) to the second terminal (TB);
causing the second terminal (TB) to transfer the second rights object (RO_{B}) sent from the first terminal (TA) from the second terminal (TB) to the rights server (RI);
causing the rights server (RI) to change, on the basis of a private key (Kp_{RI RI}) of the rights server (RI), the signature information contained in the second rights object (RO_{B}) sent from the second terminal (TB); and
transmitting a third rights object containing the changed signature information from the rights server (RI) to the second terminal (TB).

12. The method according to claim 11, **characterized by** further comprising a step of causing the first terminal (TA) to rewrite rights information contained in the first rights object (RO_{A}) from the first rights information to second rights information or add third rights information representing one of a rights consumption state and a rights usable range.

13. The method according to claim 11, **characterized by** further comprising a step of, if a message authentication code (MAC) value calculated on the basis of constituent elements of the first rights object (RO_{A}) is added to the first rights object (RO_{A}), recalculating, on the basis of constituent elements of the second rights object (RO_{B}), a MAC value to be added to the generated second rights object (RO_{B}).

14. A copyrighted content moving method of transferring encrypted content and a first rights object (RO_{A}) from a first terminal (TA) to a second terminal (TB) of a moving destination via a rights server (RI), the first rights object (RO_{A}) containing first rights information of the encrypted content (EC) and encryption key information (K_{REK}) encrypted on the basis on a public key (Kp_{RI A}) of the first terminal (TA), **characterized by** comprising steps of:
causing the first terminal (TA) to acquire a public key (K_{PRI_B}) of the second terminal (TB) from the second terminal (TB);
causing the first terminal (TA) to re-encrypt, on the basis of the acquired public key (Kp_{RI B}) of the second terminal (TA), the encryption key information (K_{REK}) encrypted by the public key (Kp_{RI A}) of the first terminal (TA) and contained in the rights object as a moving target;
transmitting a second rights object (RO_{B}) containing the encryption key information (K_{REK}) re-encrypted on the basis of the public key (K_{PRI_B}) of the second terminal (TB) from the first terminal (TA) to the rights server (RI.);
causing the rights server (RI) to change, on the basis of a private key (K_{PRI_RI}) of the rights server (RI), signature information contained in the second rights object (RO_{B}) sent from the first terminal (TA);
returning a third rights object containing the changed signature information from the rights server (RI) to the first terminal (TA); and
transmitting, to the second terminal (TB), the encrypted content (EC) and the third rights object returned from the rights server (RI) from the first terminal (TA).

15. The method according to claim 14, **characterized by** further comprising a step of causing the first terminal (TA) to rewrite rights information contained in the first rights object (RO_{A}) from the first rights information to second rights information or add third rights information representing one of a rights consumption state and a rights usable range.

16. The method according to claim 14, **characterized by** further comprising a step of, if a message authentication code (MAC) value calculated on the basis of constituent elements of the first rights object (RO_{A}) is added to the first rights object (RO_{A}), recalculating, on the basis of constituent elements of the second rights object (ROg), a MAC value to be added to the generated second rights object (RO_{B}).

17. An information terminal apparatus **characterized by** comprising:
a module (34) configured to store encrypted content (EC) and a first rights object (RO_{A}) which contains first rights information of the encrypted content (EC) and encryption key information (K_{REK}) encrypted on the basis on a first user domain key (K_{D1}) that defines a range of users who can use the rights;
a module (3311) configured to store user domain management information including the first user domain key (K_{D1}) and a second user domain key (K_{D2}) different from the first user domain key (K_{D1});
a module (38) (39) configured to receive a user domain division/merger request; and
a module (3312) configured to generate a second rights object (RO_{A}) corresponding to a user domain of a division/merger destination upon receiving the division/merger request by re-encrypting, on the basis of the stored second user domain key (K_{D2}), the encryption key information (K_{REK}) contained in the first rights object (RO_{A}).

18. An information terminal apparatus **characterized by** comprising:
a module (34) configured to store encrypted content (EC) and a first rights object (RO_{A}) which contains first rights information of the encrypted content (EC) and encryption key information (K_{REK}) encrypted on the basis on a first user domain key (K_{D1}) that defines a range of users who can use the right;
a module (3311) configured to store user domain management information including the first user domain key (K_{D1}) and a second user domain key (K_{D2}) different from the first user domain key (K_{D1});
a module (38)(39) configured to receive a user domain merger request; and
a module (3312) configured to generate a second rights object corresponding to a user domain of a merger destination upon receiving the merger request by re-encrypting, on the basis of the stored second user domain key (K_{D2}), the encryption key information (K_{REK}) encrypted by the first user domain key (K_{D1}) and adding the re-encrypted encryption key information (K_{REK}) to the first rights object (RO_{A}).

19. An information terminal apparatus **characterized by** comprising:
a module (34) configured to store encrypted content (EC) and a rights object which contains first rights information of the encrypted content (EC) and two pieces of encryption key information respectively encrypted on the basis on a first user domain key (K_{D1}) and a second user domain key (K_{D2}) that define a range of users who can use the right;
a module (3311) configured to store user domain management information including the first user domain key (K_{D1}) and the second user domain key (K_{D2}) different from the first user domain key (K_{D1});
a module (38) (39) configured to receive a user domain division request; and
a module (3312) configured to generate a second rights object (RO_{B}) corresponding to a user domain of a division destination upon receiving the division request by deleting, from the first rights object (RO_{A}), one of the encryption key information (K_{REK}) encrypted by the first user domain key (K_{D1}) and the encryption key information (K_{REK}) encrypted by the second user domain key (K_{D2}).
